# EUROPÄISCHE PATENTSCHRIFT

(11) **EP 0 893 907 B1**
(45) Veröffentlichungstag und Bekanntmachung des Hinweises auf die Patenterteilung: **09.08.2000**
(21) Anmeldenummer: 98101907.8
(22) Anmeldetag: 04.02.1998
(51) Int. Cl.: H04N 1/21, G03B 27/46, G06F 3/12

(54) **Auf digitaler Bildverarbeitung basierendes System zur Herstellung von Bildern**
Digital image processing - based system for producing images
Système utilisant un procédé de traitement numérique d'image pour la fabrication d'images

(30) Priorität: 24.07.1997 EP 97112762
(43) Veröffentlichungstag der Anmeldung: 27.01.1999
(60) Teilanmeldung: 00101683.1
(73) Patentinhaber: GRETAG IMAGING AG, CH-8105 Regensdorf (CH)
(72) Erfinder: Murbach, Hans Peter, 8032 Zürich (CH)
(74) Vertreter: Schwabe - Sandmair - Marx

(56) Entgegenhaltungen:
- PATENT ABSTRACTS OF JAPAN vol. 097, no. 006, 30.Juni 1997 & JP 09 055834 A (FUJI PHOTO FILM CO LTD), 25.Februar 1997, -& DATABASE WPI Section EI, Week 9718 Derwent Publications Ltd., London, GB; Class T01, AN 97-199935 XP002059378 & JP 09 055 834 (FUJI XEROX CO LTD) , 25.Februar 1997
- PATENT ABSTRACTS OF JAPAN vol. 097, no. 006, 30.Juni 1997 & JP 09 034038 A (FUJI PHOTO FILM CO LTD;FUJI PHOTO OPTICAL CO LTD), 7.Februar 1997,
- PATENT ABSTRACTS OF JAPAN vol. 095, no. 007, 31.August 1995 -& JP 07 111628 A (KONICA CORP), 25.April 1995,
- PATENT ABSTRACTS OF JAPAN vol. 096, no. 012, 26.Dezember 1996 & JP 08 211497 A (FUJI PHOTO FILM CO LTD), 20.August 1996,

## Beschreibung

Die Erfindung betrifft ein auf digitaler Bildverarbeitung basierendes System zur Herstellung von Kopien von Kopiervorlagen auf fotografischem Kopiermaterial, gemäß dem Anspruch 1.

Klassische Systeme zur Herstellung von fotografischen Kopien umfassen typischerweise die folgenden Komponenten:
- eine Vorbereitungsstation, in der belichtete Filme aus den sie enthaltenden Patronen entnommen und ggf. zu einem langen Streifen zusammengespleisst werden und in welcher auftragsspezifische Begleitdaten in das System eingegeben werden,
- einen Filmprozessor zur Entwicklung und Trocknung der Filme,
- einen Scanner, welcher die auf den entwickelten Filmen vorhandenen einzelnen Bilder (Kopiervorlagen) fotoelektrisch abtastet,
- ein analog-optisches oder digitales Belichtungsgerät, welches die Bildinformation der Kopiervorlagen auf fotografisches Kopiermaterial, üblicherweise Kopierpapier, aufbelichtet,
- einen Belichtungsrechner, welcher die vom Scanner erfassten Abtastdaten zu Belichtungsdaten verarbeitet und das Belichtungsgerät damit steuert,
- einen Papierprozessor zur Entwicklung und Trocknung des im Belichtungsgerät belichteten fotografischen Kopiermaterials und
- eine Endverarbeitungsstation, welche die entwickelten Filme und die zugehörigen Kopien auftragsweise zusammenführt und ggf. verpackt.

Der Filmprozessor kann zur Verarbeitung von einzelnen Filmen oder zur Verarbeitung von zu einem langen Streifen zusammengespleissten Filmen ausgelegt sein. Der Scanner und der Belichtungsrechner sind normalerweise mit dem Belichtungsgerät zu einer üblicherweise als Printer bezeichneten apparativen Einheit zusammengebaut. Der Printer bzw. das in ihm enthaltene Belichtungsgerät kann zur Verarbeitung von Einzelbildvorlagen, einzelnen Filmen oder gespeissten Filmstreifen sowie von Einzelblättern oder von langen Streifen von Kopiermaterial ausgelegt sein. Das Belichtungsgerät kann die Kopiervorlagen analog-optisch (fotografisch) auf das Kopiermaterial abbilden oder vom Scanner erzeugte Bildinformationsdaten auf das Kopiermaterial bildmässig aufbelichten. Die einzelnen Komponenten der Systeme können ganz oder teilweise alleine stehen oder mit bezüglich des Arbeitsflusses vorangehenden oder nachfolgenden Komponenten gekoppelt sein. Bei alleinstehenden Komponenten erfolgt der Transport von Filmen und Kopiermaterial zwischen den einzelnen Komponenten batch-weise durch geeignete Transportmittel oder manuell. Bei gekoppelten Komponenten werden Filme und Kopiermaterial taktweise direkt jeweils von einer zur nächstfolgenden Komponente weitergereicht, wobei die einzelnen Komponenten in begrenztem Umfang auch durch geeignete Film- bzw. Papier-Puffer geschwindigkeitsmässig entkoppelt sein können.

Bei solchen Systemen, unabhängig davon, ob es sich um sog. Minilabs oder um die in Grosslabors eingesetzten Hochleistungsanlagen handelt, sind die einzelnen Arbeitsabläufe insofern produktgesteuert, als die Verbindung der einzelnen Komponenten des Systems durch die entwickelten Filme und das belichtete Kopiermaterial gegeben und gesteuert ist. Diese produktgesteuerte Verbindung diktiert die Sequenz und die Geschwindigkeit der einzelnen Arbeitsschritte. Im Interesse einer möglichst hohen Effizienz des Gesamtsystems erfordern diese Systeme eine sorgfältige Vorbereitung und Planung der Auftragsabwicklung, wozu z.B. die Sortierung der Aufträge nach verschiedenen Filmtypen, nach zu verwendendem fotografischem Kopiermaterial usw. gehört. Die Notwendigkeit von Vorbereitung und Planung der Auftragsabwicklung ist insofern nachteilig, als sie die Freiheitsgrade und die Flexibilität der Auftragsabwicklung in der Praxis unangemessen beschränkt.

Aus der JP-A-09055834 ist ein System zur Herstellung von Bildern bekannt, in dem von einer CCD-Einrichtung Bildinformationen des Filmes erfasst werden. Ein Strichcode auf dem Film wird abgetastet, um die der Bildinformation zugeordnete Filmnummer und die Bildnummer zusammen mit der Bildinformation in einer Speichereinrichtung zu speichern. Die abgespeicherten Bildinformationen können später durch Eingabe der Film- und Bildnummer über eine Tastatur wieder aufgefunden und auf einem Ausgabemedium sichtbar gemacht werden.

Die JP-A-09034038 betrifft ein Belichtungsverfahren, um digital abgespeicherte Daten mittels einer LCD-Anzeige auf Fotopapier abzubilden, wobei mittels einer Bildverarbeitung auch unscharfe Bilddaten korrigiert werden können.

Die JP-A-07111628 zeigt eine Digitalkamera zur Aufnahme und Abspeicherung von beliebigen Motiven.

Die JP-A-08211497 stellt ein Verfahren zur Verarbeitung von Bilddaten vor, die auf mehreren Festplatten abgespeichert sind.

Durch die vorliegende Erfindung soll nun ein System zur Herstellung von Bildern geschaffen werden, welches die oben genannten Nachteile herkömmlicher Systeme vermeidet und innerhalb der durch die Systemkomponenten gesetzten Grenzen die Abwicklung beliebiger Aufträge ohne vorbereitende Planung ermöglicht.

Die Lösung der der Erfindung zugrundeliegenden Aufgabe ergibt sich aus den im Anspruch 1 beschriebenen Merkmalen. Besonders vorteilhafte Ausgestaltungen und Weiterbildungen sind Gegenstand der abhängigen Ansprüche.

Einer der wesentlichsten Aspekte der vorliegenden Erfindung besteht darin, dass die herzustellenden Bilder repräsentierenden Bilddaten zusammen mit ihren zugehörigen Begleitdaten nach Art einer Datenbank in einem Datenspeicher zwischengespeichert werden, wobei eine Steuereinrichtung die gespeicherten Daten verwaltet und den Datenfluss zwischen dem Datenspeicher und der Eingabeeinrichtung und der Ausgabeeinrichtung auftragsorientiert regelt. Auf diese Weise sind die Eingabeeinrichtung und die Ausgabeeinrichtung produktmäßig entkoppelt, und die Einspeisung der Bild- und Begleitdaten von der Eingabeeinrichtung in den Datenspeicher kann unabhängig von der Ausgabe der Daten an die Ausgabeeinrichtung erfolgen. Dadurch können die Eingabe und die Ausgabeeinrichtung mit unterschiedlichen, dem jeweiligen Prozess optimal angepassten Geschwindigkeiten betrieben werden. Ausserdem können Eingabe und Ausgabeeinrichtung räumlich getrennt angeordnet werden, was die Flexibilität des Systems und der Arbeitsabläufe weiter erhöht. Erfindungsgemäß sind ferner Schnittstellen für die Eingabe- und die Ausgabeeinrichtung vorgesehen, um digitale Bild- und Steuerdaten auch von entfernten Orten verarbeiten zu können.

In einer zweckmässigen Ausführungsform des erfindungsgemässen Systems weist die Eingabeeinrichtung mindestens eine Abtasteinrichtung zur bildmässigen fotoelektrischen Abtastung von körperlichen Kopiervorlagen und zur Erzeugung von die Kopiervorlagen repräsentierenden Bilddaten auf. Ferner weist die Ausgabeeinrichtung mindestens einen Farbdrucker oder eine digitale Belichtungseinrichtung zur bildmässigen Aufbelichtung der im Datenspeicher zwischengespeicherten Bilddaten auf ein fotografisches Kopiermaterial auf. In dieser Ausführungsform ist das System zur Herstellung von fotografischen Kopien von einer körperlichen Kopiervorlage, typischerweise den einzelnen Bildern eines entwikkelten fotografischen Films geeignet. Durch die Digitalisierung der Kopiervorlagen und die Zwischenspeicherung der Bilddaten im Datenspeicher entfällt die sonst übliche körperliche Zwischenspeicherung bzw. Pufferung zwischen den entsprechenden Komponenten, was Kosten- und Platzersparnis bedeutet.

In einer weiteren, besonders zweckmässigen Ausführungsform des erfindungsgemäßen Systems weist die Eingabeeinrichtung mindestens ein mit der Steuereinrichtung zusammenwirkendes Eingabemodul mit einer Entwicklungsvorrichtung für fotografische Filme sowie einer mit dieser zu einer körperlichen Einheit verbundenen oder in diese integrierten Abtasteinrichtung zur bildmäßigen fotoelektrischen in-line-Abtastung der entwickelten Filme und zur Erzeugung von die auf den Filmen enthaltenen Kopiervorlagen repräsentierenden Bilddaten auf. Ferner weist die Ausgabeeinrichtung mindestens ein mit der Steuereinrichtung zusammenwirkendes Ausgabemodul mit einer Entwicklungsvorrichtung für fotografisches Kopiermaterial sowie einer mit dieser zu einer körperlichen Einheit verbundenen oder in diese integrierten digitalen Belichtungseinrichtung zur bildmäßigen in-line-Aufbelichtung der im Datenspeicher zwischengespeicherten Bilddaten auf das noch unentwickelte fotografische Kopiermaterial auf. In dieser Ausführungsform ist das System zur Herstellung von fotografischen Kopien der einzelnen Bilder fotografischer Filme geeignet. Im Unterschied zu herkömmlichen Systemen fehlt hier jedoch der Printer im klassischen Sinn, seine Funktionen sind vielmehr auf die einzelnen Eingabe- und Ausgabemodule aufgeteilt und in diese integriert. Durch den gleichzeitigen Einsatz mehrerer Eingabe- und Ausgabemodule, die beispielsweise für unterschiedliche Filmformate, Filmtypen und Kopiermaterialien ausgelegt sein können, ist es möglich, unterschiedlichste Kopieraufträge ohne vorbereitende Planung in beliebiger Reihenfolge abzuwickeln. Ausserdem kann die Steuereinrichtung die Auslastung der einzelnen Module optimieren und somit die Gesamteffizienz des Systems steigern.

Im folgenden wird die Erfindung anhand der Zeichnung näher erläutert. Es zeigen:
- Fig. 1: ein allgemeines Prinzipschema des erfindungsgemässen Systems,
- Fig. 2: ein etwas detaillierteres Prinzipschema eines vorteilhaften Ausführungsbeispiels,
- Fig. 3: eine Prinzipskizze eines Eingabemoduls,
- Fig. 4: eine Prinzipskizze eines Ausgabemoduls,
- Fig. 5: eine Gesamtansicht eines weiteren praktischen Ausführungsbeispiels in Form eines Minilabs,
- Fig. 6: eine Gesamtansicht einer Variante des Minilabs gemäss Fig. 5,
- Fig. 7: eine schematisierte Schnittansicht nach der Linie VII-VII der Fig. 5,
- Fig. 8-11: den oberen Teil von Fig. 7 detaillierter in verschiedenen Funktionsphasen,
- Fig. 12: eine Gesamtansicht einer beispielsweisen Ausführungsform einer im Scanner des Minilabs der Figuren 5-11 eingesetzten Filmbühne,
- Fig. 13-15: die Filmbühne der Fig. 12 von unten, von der Seite und von vorne und
- Fig. 16: ein Blockschema zur Erläuterung einer beispielsweisen Möglichkeit der Be- bzw. Verarbeitung von erfassten digitalen Bilddaten.

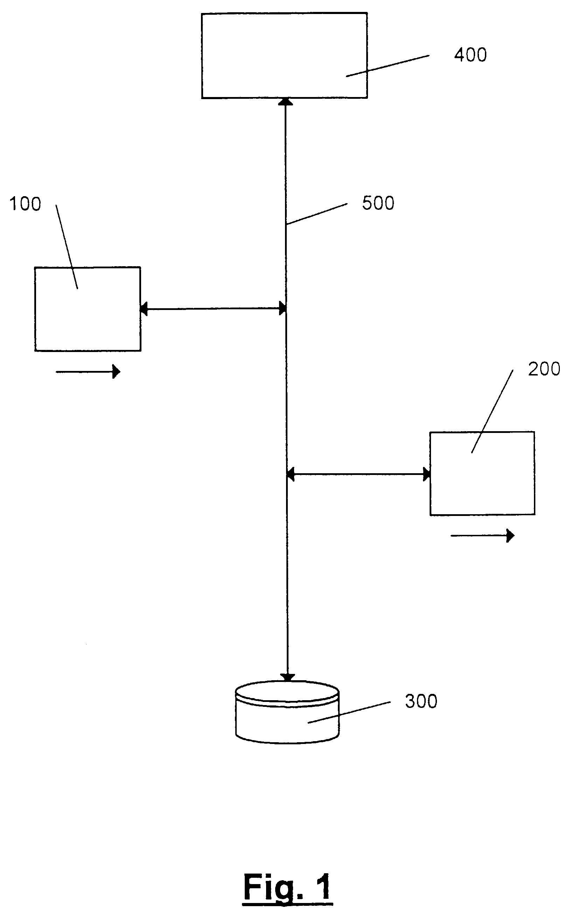

Das in Fig. 1 in seiner allgemeinsten Form dargestellte erfindungsgemässe Bildherstellungssystem umfasst eine Eingabeeinrichtung 100, eine Ausgabeeinrichtung 200, einen Datenspeicher 300, eine Steuereinrichtung 400 und einen Daten- und Steuerbus 500, an den die Einrichtungen 100, 200, 400 und der Datenspeicher 300 angeschlossen sind und welcher diese Einrichtungen und den Datenspeicher untereinander verbindet.

Die Eingabeeinrichtung 100 dient zur Erfassung digitaler, die herzustellenden Bilder repräsentierender Bilddaten von einem Eingabemedium sowie zur Erfassung von den Bilddaten zugeordneten Begleitdaten. Beispielsweise kann die Eingabeeinrichtung 100 als Abtasteinrichtung zur bildmässigen fotoelektrischen Abtastung von körperlichen Kopiervorlagen als Eingabemedium und zur Erzeugung von die Kopiervorlagen repräsentierenden Bilddaten ausgebildet sein und eine Konsole oder Eingabestation für die Eingabe von auftragsspezifischen Begleitdaten aufweisen. Unter Begleitdaten werden hier und im folgenden auftragsspezifische Daten (wie z.B. Auftrags-Nummer, Nummern der zu kopierenden Bildfelder, Anzahlen und Formate der herzustellenden Kopien, Oberflächen-Qualität des fotografischen Kopiermaterials, gewünschtes Ausgabemedium, eventuelle Korrekturen etc.) verstanden.

Der Datenspeicher 300 dient zur Zwischenspeicherung der von der Eingabeeinrichtung 100 erfassten Bilddaten und der zugeordneten Begleitdaten; er kann z.B. nach Art einer Datenbank organisiert sein.

Die Ausgabeeinrichtung 200 gibt die im Datenspeicher 300 zwischengespeicherten Bilddaten auf ein Ausgabemedium aus. Beispielsweise kann die Ausgabeeinrichtung als digitale Belichtungseinrichtung (z.B. Laser-Belichtungsgerät, CRT-Belichtungsgerät) zur bildmässigen Aufbelichtung der Bilddaten auf ein fotografisches Kopiermaterial als Ausgabemedium ausgebildet sein. Alternativ kann die Ausgabeeinrichtung 200 beispielsweise auch durch einen ausreichend hoch auflösenden Farbdrucker (z.B. Laser-Drucker oder Tintenstrahl-Drucker) realisiert sein, wobei das Ausgabemedium dann entsprechend ein für diese Zwecke geeignetes Papier oder anderes Substrat ist.

Die über den Daten- und Steuerbus 500 mit der Eingabeeinrichtung 100, der Ausgabeeinrichtung 200 und dem Datenspeicher 300 verbundene Steuereinrichtung 400 steuert diese Einrichtungen und den Datenspeicher und verwaltet und kontrolliert den Datenfluss zwischen diesen Einrichtungen und dem Datenspeicher auftragsorientiert nach Massgabe der den Bilddaten zugeordneten Begleitdaten. Die Steuereinrichtung 400, der Daten- und Steuerbus 500 und der Datenspeicher 300 sind durch einen entsprechend programmierten digitalen Rechner realisiert, die Eingabeeinrichtung 100 und die Ausgabeeinrichtung 200 bilden periphere Einheiten und sind über geeignete, nicht dargestellte Schnittstellen an den Rechner angeschlossen.

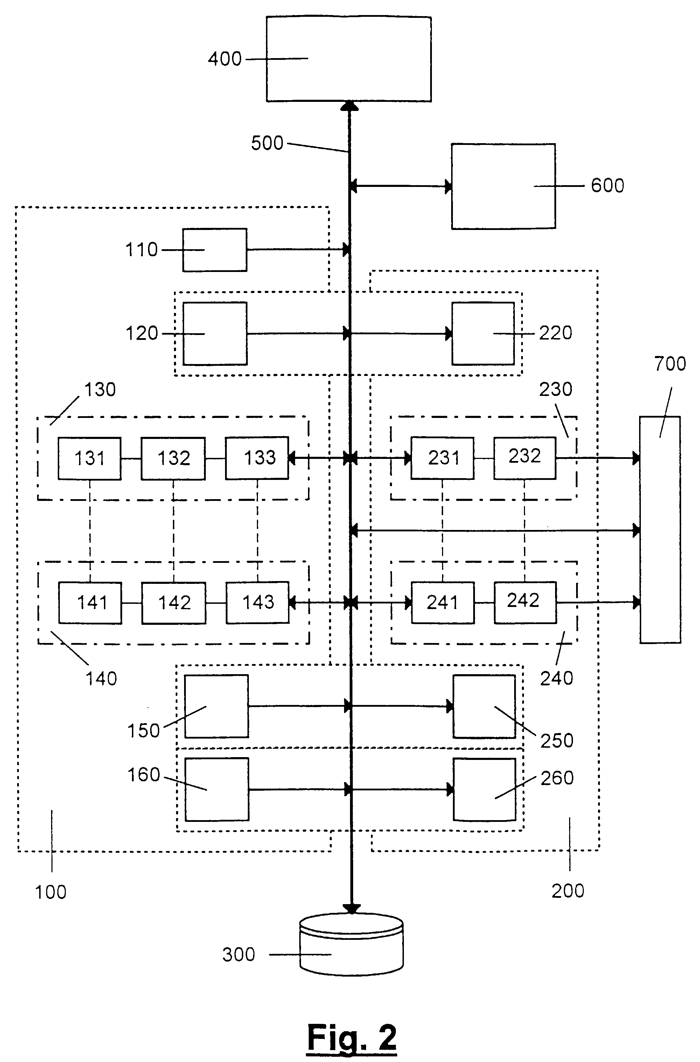

In Fig. 2 ist ein bevorzugtes Ausführungsbeispiel des erfindungsgemässen Bildherstellungssystems detaillierter dargestellt. Man erkennt wiederum die Eingabeeinrichtung 100, die Ausgabeeinrichtung 200, den Datenspeicher 300, die Steuereinrichtung 400 und den Daten- und Steuerbus 500. Zusätzlich sind an den Bus 500 eine digitale Bilddaten-Aufbereitungseinrichtung 600 und eine Sammeleinrichtung 700 angeschlossen. Die Aufbereitungseinrichtung 600 und die Sammeleinrichtung 700 arbeiten mit der Steuereinrichtung 400 zusammen und werden von dieser gesteuert. Die Bilddaten-Aufbereitungseinrichtung 600 ist vorzugsweise durch einen entsprechenden Programmteil des schon genannten Rechners implementiert.

Die Eingabeeinrichtung 100 umfasst eine Log-In-Station 110, eine Eingangs-Schnittstelle 120 zu einem Datennetzwerk, zwei Eingabemodule 130 und 140, eine Einlesevorrichtung 150 für einen Datenträger in Form einer Diskette und eine Einlesevorrichtung 160 für einen Datenträger in Form einer CD, insbesondere einer Daten- oder Photo-CD.

Die Ausgabeeinrichtung 200 umfasst eine Ausgangs-Schnittstelle 220 zu einem Datennetzwerk, zwei Ausgabemodule 230 und 240, eine Aufzeichnungsvorrichtung 250 für einen Datenträger in Form einer Diskette und eine Aufzeichnungsvorrichtung 260 für einen Datenträger in Form einer CD, insbesondere einer Daten- oder Photo-CD.

Die Eingangs-Schnittstelle 120 und die Ausgangs-Schnittstelle 220 zu einem Datennetzwerk können selbstverständlich zu einer gemeinsamen bi-direktionalen Schnittstelle zusammengefasst sein. Desgleichen können die Einlesevorrichtungen 150 bzw. 160 mit den jeweiligen Aufzeichnungsvorrichtungen 250 bzw. 260 je zu einer entsprechenden bi-direktionalen Vorrichtung zusammengefasst sein. Die getrennte Darstellung in der Zeichnung dient lediglich der leichteren Verständlichkeit.

Die Eingabemodule 130 und 140 umfassen je eine Vorbereitungsstation 131 bzw. 141 für unentwickelte fotografische Filme, von denen fotografische Bilder herzustellen sind, eine Entwicklungsvorrichtung 132 bzw. 142 für die Filme und eine Abtasteinrichtung 133 bzw. 143 zur bildmässigen fotoelektrischen in-line-Abtastung der entwikkelten Filme und zur Erzeugung von die auf den Filmen enthaltenen Kopiervorlagen (einzelnen Bilder) repräsentierenden Bilddaten. Als Abtasteinrichtungen 133 bzw. 143 können beispielsweise die in digitalen fotografischen Printern üblichen Scanner eingesetzt werden.

In der an sich konventionellen Vorbereitungsstation 131 bzw. 141 werden belichtete fotografische Filme aus ihren Patronen entnommen und entweder einzeln, insbesondere an einer sog. Leaderkarte befestigt, oder nach Spleissung in Form eines langen Streifens der nachfolgenden Entwicklungsvorrichtung 132 bzw. 142 zugeführt. Ferner kann die Vorbereitungsstation auch eine Eingabe-Konsole aufweisen, über welche auftragsspezifische Begleitdaten (Auftrags-Nummer, Nummern der zu kopierenden Bildfelder, Anzahlen und Formate der herzustellenden Kopien, gewünschtes Ausgabemedium, Korrekturen etc.) in das System eingegeben werden können. Alternativ oder, falls die Vorbereitungsstation keine Eingabe-Konsole aufweist, können die Begleitdaten auch über die Log-In-Station 110 in das System eingegeben werden. Die fertig entwickelten Filme werden, nachdem sie von der Abtasteinrichtung 133 bzw. 143 bildmässig fotoelektrisch abgetastet worden sind, in an sich bekannter Weise entweder einzeln oder zu einer Rolle aufgewickelt für die weitere Verarbeitung (Zusammenführung mit den von ihnen hergestellten Kopien) bereitgestellt.

Die Abtasteinrichtungen 133 und 143 erzeugen von jedem abgetasteten Bild einen Satz roher Bilddaten (typisch pro abgetastetem Bildpunkt entweder die Farbkoordinaten eines Farbsystems oder eine mehr oder weniger grosse Anzahl von spektralen Dichtewerten). Diese rohen Bilddaten werden der Bilddaten-Aufbereitungseinrichtung 600 zugeführt und von dieser im Hinblick auf die Ausgabe an digitale Belichtungseinrichtungen 231 und 241 umgerechnet, wobei gleichzeitig eventuell erforderliche Belichtungskorrekturen erkannt und mitberücksichtigt werden. Die so umgerechneten Daten werden dann zusammen mit den zugeordneten Begleitdaten als Bilddaten im Datenspeicher 300 zwischengespeichert. Die Umrechnung erfolgt in an sich bekannter Weise nach Massgabe eines geeigneten Color Management Systems, z.B. des Gretag-Macbeth Color Management Systems der Gretag Imaging AG, Regensdorf, Schweiz. Die Bilddaten-Aufbereitungseinrichtung 600 ist ein an sich bekannter Bildprozessor, wie er z.B. auch in herkömmlichen digitalen Printern eingesetzt wird, und bedarf deshalb keiner weiteren Erläuterung.

Die Ausgabemodule 230 und 240 umfassen je eine digitale Belichtungseinrichtung 231 bzw. 241 zur bildmässigen in-line-Aufbelichtung der im Datenspeicher 300 zwischengespeicherten Bilddaten auf ein fotografisches Kopiermaterial und eine Entwicklungsvorrichtung 232 bzw. 242 für das belichtete fotografische Kopiermaterial. Als digitale Belichtungseinrichtungen 231 bzw. 241 können beispielsweise die in digitalen fotografischen Printern üblichen digitalen Laser- oder CRT-Belichtungseinrichtungen eingesetzt werden. Die Entwicklungsvorrichtung 232 bzw. 242 kann in an sich bekannter Weise für die Verarbeitung von Blattmaterial oder von Streifenmaterial ausgelegt sein.

Von der Entwicklungsvorrichtung 232 bzw. 242 gelangt das fertig entwickelte fotografische Kopiermaterial zur Sammeleinrichtung 700, wo es in an sich bekannter Weise, üblicherweise nach einer Schneide-Operation, auftragsweise geordnet und ggf. mit den zugehörigen Eingabemedien, typischerweise den entsprechenden Filmen und Auftragstaschen etc., zusammengeführt und verpackt wird. Die Ordnung (Sortierung) der fertigen Kopien und ihre Zusammenführung mit dem zugeordneten Eingabemedium erfolgt dabei nach Massgabe der den Bilddaten zugeordneten, im Datenspeicher 300 zwischengespeicherten Begleitdaten gesteuert durch die Steuereinrichtung 400.

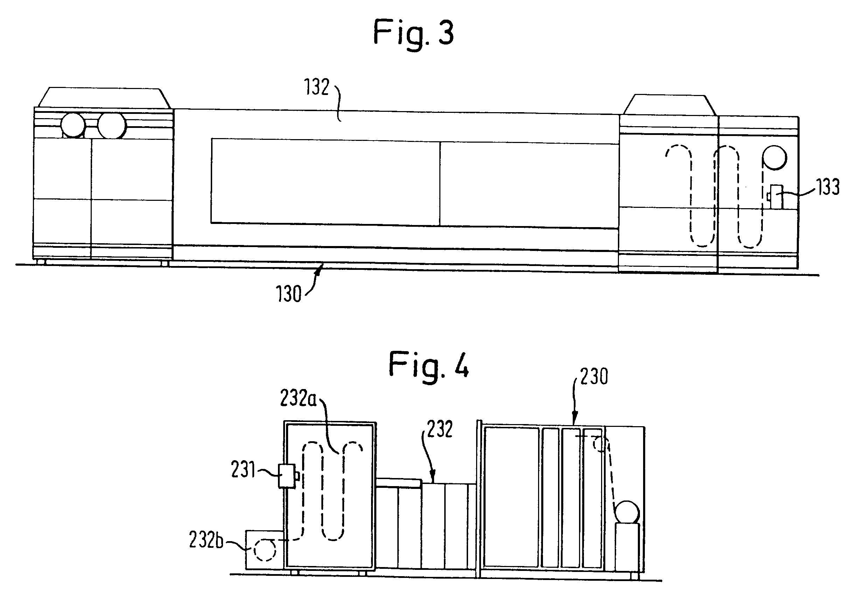

Eine besonders zweckmässige und vorteilhafte Ausgestaltung der Eingabemodule und der Ausgabemodule ist in den Figuren 3 und 4 dargestellt.

Wie man erkennt, ist die Abtasteinrichtung 133 mit der Film-Entwicklungsvorrichtung 132 zu einer körperlichen Einheit zusammengefasst bzw. in die Entwicklungsvorrichtung integriert. Die Abtasteinrichtung 133 ist dabei an der Ausgangsseite der Entwicklungsvorrichtung 132 angeordnet, so dass sie die fertig entwickelten und getrockneten Filme in-line abtasten kann. Die Abtasteinrichtung 133 und die Entwicklungsvorrichtung 132 sind, wie schon erwähnt, an sich konventionell aufgebaut und bedürfen keiner weiteren Erläuterung.

Entsprechend ist die digitale Belichtungseinrichtung 231 mit der Papier-Entwicklungsvorrichtung 232 zu einer körperlichen Einheit zusammengefasst bzw. in die Entwicklungsvorrichtung integriert. Die digitale Belichtungseinrichtung 231 ist dabei an der Eingangsseite der Entwicklungsvorrichtung 232 angeordnet, so dass sie das noch unentwickelte Kopiermaterial bildmässig belichten kann. Dem nasschemischen Teil der Entwicklungsvorrichtung ist dazu ein Eingabepuffer 232a vorgeschaltet, in dem die digitale Belichtungseinrichtung angeordnet ist und der das in einer Papierkassette 232b vorrätig gehaltene fotografische Kopiermaterial in den nasschemischen Teil der Entwicklungsvorrichtung führt. Die digitale Belichtungseinrichtung 231 und die Entwicklungsvorrichtung 232 sind ansonsten konventionell aufgebaut und bedürfen keiner weiteren Erläuterung. Anstatt von einer Papierkassette kann das unbelichtete fotografische Kopiermaterial der Entwicklungsvorrichtung auch direkt von einem Dunkelraum zugeführt werden, in dem grössere Rollen des Kopiermaterials vorrätig gehalten sind.

Im dargestellten Ausführungsbeispiel ist die Eingabeeinrichtung mit zwei Eingabemodulen 130 und 140 ausgestattet. Selbstverständlich könnte auch nur ein einziges Eingabemodul vorhanden sein oder es können mehrere Eingabemodule vorgesehen sein. Besonders vorteilhaft ist es, wenn zwei oder mehrere Eingabemodule vorgesehen sind und wenn diese unterschiedlich ausgebildet sind. Beispielsweise können die verschiedenen Eingabemodule für unterschiedliche Filmtypen (z.B. 135, APS, etc.) ausgelegt sein. Die Eingabemodule können körperlich auch kombiniert sein. Ferner kann für die Abwicklung von Nachbestellaufträgen mindestens ein Eingabemodul auch zur Verarbeitung von entwickelten fotografischen Filmen ausgelegt sein, wobei dann die Film-entwicklungsvorrichtung natürlich nicht erforderlich ist.

In analoger Weise kann die Ausgabeeinrichtung 200 auch nur ein einziges Ausgabemodul aufweisen oder aber mit mehr als zwei Ausgabemodulen versehen sein. Besonders vorteilhaft ist es, wenn zwei oder mehrere Ausgabemodule vorgesehen sind und wenn diese unterschiedlich ausgebildet sind. Beispielsweise können die verschiedenen Ausgabemodule für unterschiedliches Kopiermaterial (verschiedene Breiten, verschiedene Oberflächen-Qualitäten) ausgelegt sein. Die Ausgabemodule können körperlich auch kombiniert und z.B. mit einer gemeinsamen, mehrbahnigen Papierentwicklungsvorrichtung versehen sein.

Die Bilddaten von herzustellenden Bildern und die zugehörigen Begleitdaten können dem System auch auf anderem Wege zugeführt werden. So können diese Daten beispielsweise auf einem digitalen Datenträger in Form einer Diskette oder einer Daten- oder Photo-CD vorhanden sein und mittels der entsprechenden Einlesevorrichtungen 150 bzw. 160 eingelesen und dann im Datenspeicher 300 zwischengespeichert werden. Ferner kann das System über die Eingangs-Schnittstelle 120 mit einem Datennetzwerk verbunden sein, auf welchem die zu verarbeitenden Bilddaten und zugehörigen Begleitdaten zur Verfügung gestellt sind und in das System eingelesen werden können. Die Umrechnung der eingelesenen Bilddaten in der Aufbereitungseinrichtung 600 erfolgt dabei nur dann, wenn die Bilddaten nicht schon in umgerechneter Form vorliegen, wobei die Unterscheidung z.B. anhand der Begleitdaten erfolgen kann.

Umgekehrt kann die Ausgabe der zwischengespeicherten Bilddaten auch auf ein anderes Ausgabemedium als fotografisches Kopiermaterial erfolgen. So können die Bilddaten ggf. zusammen mit den zugehörigen Begleitdaten mittels der Aufzeichnungsvorrichtungen 250 und 260 auf einen digitalen Datenträger in Form einer Diskette bzw. einer Daten- oder Photo-CD aufgezeichnet oder mittels der Ausgangs-Schnittstelle 220 in ein Datennetzwerk eingespeist werden. Die so auf einen Datenträger aufgezeichneten oder in ein Datennetzwerk eingespeisten Bilddaten können, ggf. nach externer Bearbeitung, zu einem späteren Zeitpunkt wieder in das Bildherstellungssystem eingelesen und beispielsweise auf ein anderes Ausgabemedium, beispielsweise fotografisches Kopiermaterial, ausgegeben werden.

Die Steuereinrichtung 400 kontrolliert den Datenfluss auftragsorientiert nach Massgabe der den Bilddaten zugeordneten Begleitdaten. Sie nimmt die Bilddaten und die zugeordneten Begleitdaten von den verschiedenen Komponenten der Eingabeeinrichtung 100 entgegen, speichert sie auftragsorientiert im Datenspeicher 300 und leitet sie ebenfalls auftragsorientiert nach Massgabe der den Bilddaten zugeordneten Begleitdaten an die verschiedenen Komponenten der Ausgabeeinrichtung 200 weiter.

Die Sammeleinrichtung 700 ordnet in Zusammenarbeit mit der Steuereinrichtung 400 nach Massgabe der den Bilddaten zugeordneten Begleitdaten jeweils die Eingabemedien den entsprechenden Ausgabemedien zu. Im Falle eines fotografischen Films als Eingabemedium kann dieser den erzeugten zugehörigen Kopien oder der erzeugten Diskette oder CD als Ausgabemedium zugeordnet werden. Im Falle einer Diskette oder einer CD als Eingabemedium werden z.B. die erzeugten Kopien oder eine andere Diskette oder CD als Ausgabemedium zugeordnet, u.s.w.. Im wesentlichen entspricht die Sammeleinrichtung 700 einer konventionellen Sortier- und Verpackungseinrichtung, wie sie bei klassischen Foto-Finishing-Linien üblich sind, und bedarf deshalb keiner weiteren Erläuterung.

Es versteht sich, dass in anderen Ausführungsvarianten die Eingabeeinrichtung 100 und die Ausgabeeinrichtung 200 jeweils auch nur einen Teil oder mehrere der in Fig.2 beispielsweise dargestellten Komponenten aufweisen können.

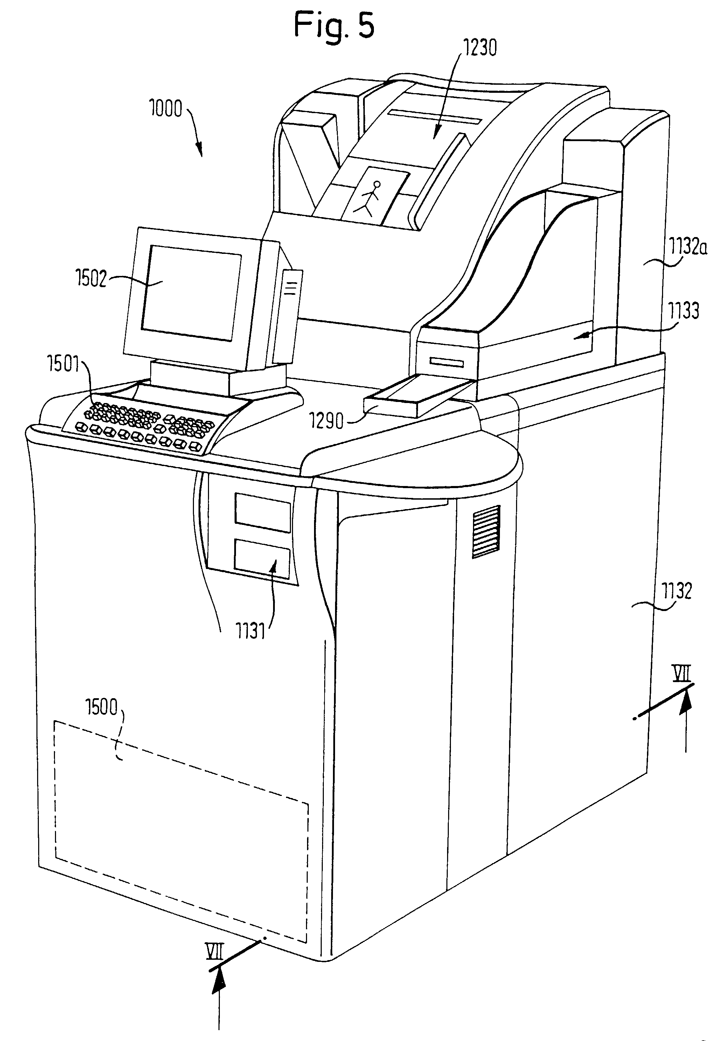

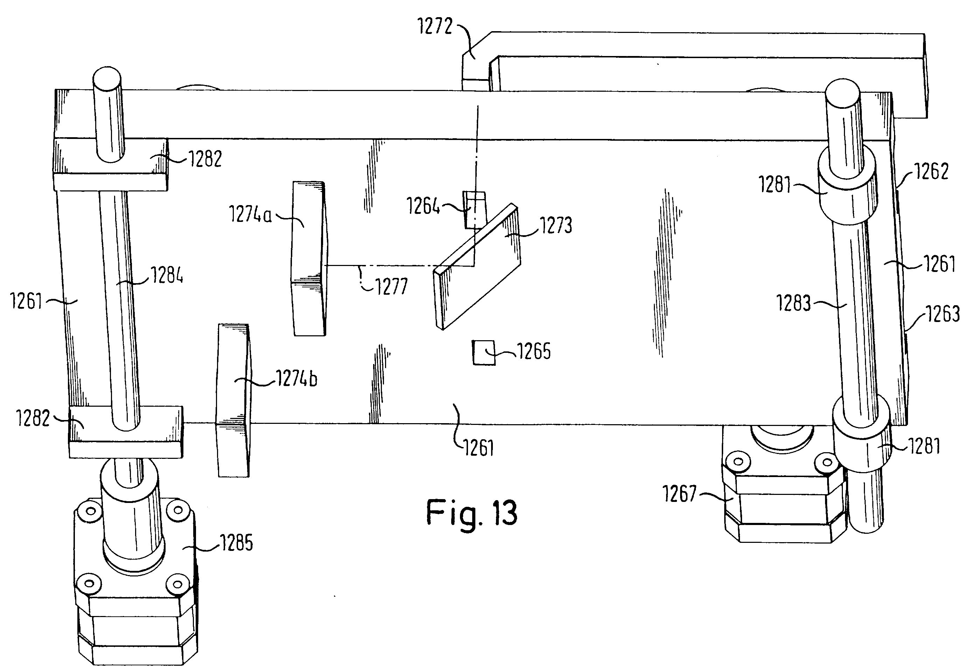

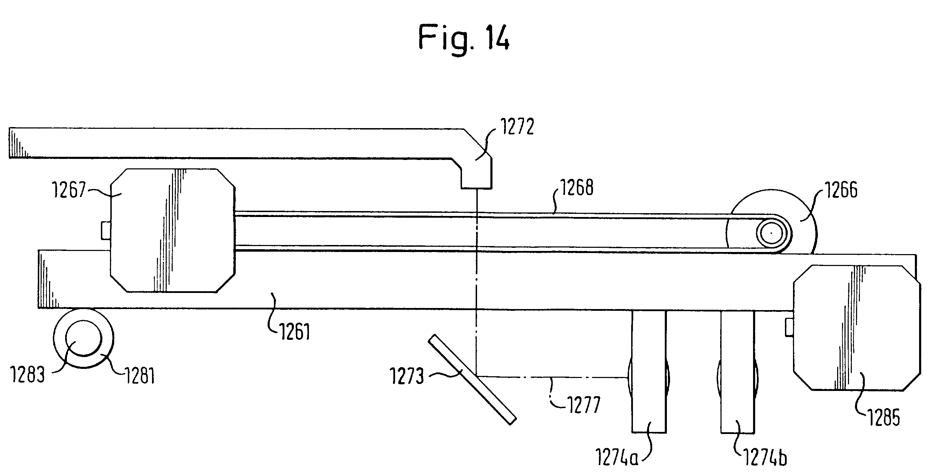

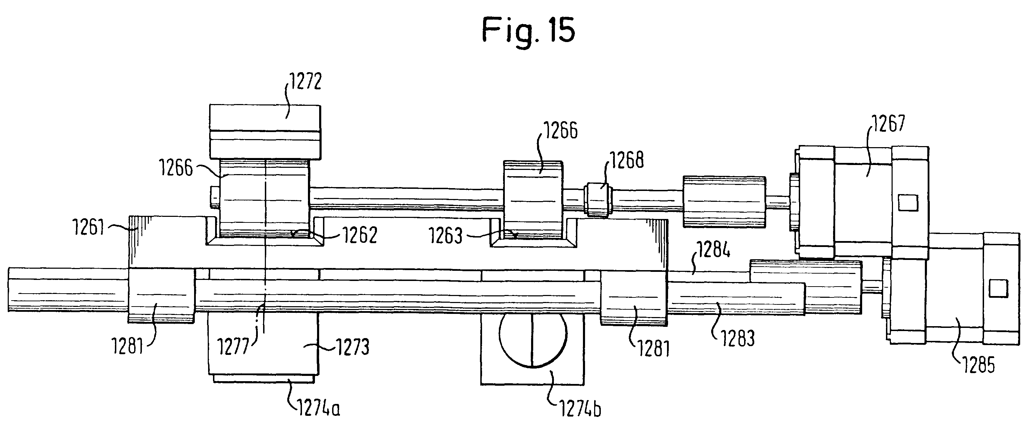

In den Figuren 5-15 ist ein konkretes Realisierungsbeispiel des erfindungsgemässen Bildherstellungssystems in Form eines Minilabs etwas ausführlicher dargestellt.

In seinem äusseren Erscheinungsbild entspricht das dargestellte Minilab im grossen und ganzen herkömmlichen Minilabs, beispielsweise etwa den Minilabs "Master Flex" oder "Master Lab⁺" der Gretag Imaging AG, Regensdorf, Schweiz. Das als Ganzes mit 1000 bezeichnete Minilab birgt in bzw. auf seinem kompakten Gehäuse alle Funktionskomponenten, die zur Herstellung von körperlichen Kopien von auf einzelnen unentwickelten fotografischen Filmen enthaltenen, als latente Bilder vorliegenden Kopiervorlagen erforderlich sind. Im einzelnen sind dies eine an sich konventionelle Ladestation 1131 für einzelne unentwickelte fotografische Filme, eine Entwicklungs- und Trocknungsvorrichtung 1132/1132a für die einzelnen Filme, eine Abtasteinrichtung (Scanner) 1133 für die entwickelten und getrockneten Filme, eine elektronische Steuerung 1500 und ein digitales Ausgabemodul 1230, welches vorzugsweise durch einen Farbdrucker (z.B. Tintenstrahl-Drucker) gebildet ist oder alternativ klassisch eine digitale Belichtungseinrichtung für im Minilab vorrätig gehaltenes fotografisches Kopiermaterial (Kopierpapier) sowie eine Entwicklungsvorrichtung für das belichtete Kopiermaterial umfasst. Die Ladestation 1131, die Entwicklungs- und Trocknungseinrichtung 1132/1132a, die Abtasteinrichtung 1133 und das Ausgabemodul 1230 entsprechen funktionell den weiter vorne im Zusammenhang mit der Fig. 2 schon im Detail beschriebenen Komponenten 131, 132, 133 und 230. Die elektronische Steuerung 1500 enthält bzw. implementiert den Bilddatenspeicher 300, die Steuereinrichtung 400, den Daten- und Steuerbus 500 und die digitale Bilddaten-Aufbereitungseinrichtung 600 bzw. die Funktionen dieser (in der Figur nicht gezeigten) Komponenten und arbeitet mit einer Tastatur 1501 und einem Monitor 1502 als Benutzer-Schnittstelle zusammen.

Die Abtasteinrichtung 1133 ist, wie weiter unten noch näher ausgeführt, so ausgebildet, dass sie nicht nur die von der Entwicklungs- und Trocknungseinrichtung 1132/ 1132a zugeführten Filme abtasten kann, sondern dass ihr entwickelte Filme auch direkt (manuell) zugeführt werden können. Dadurch kann das Minilab auch zur Abwicklung von Nachbestellungsaufträgen eingesetzt werden.

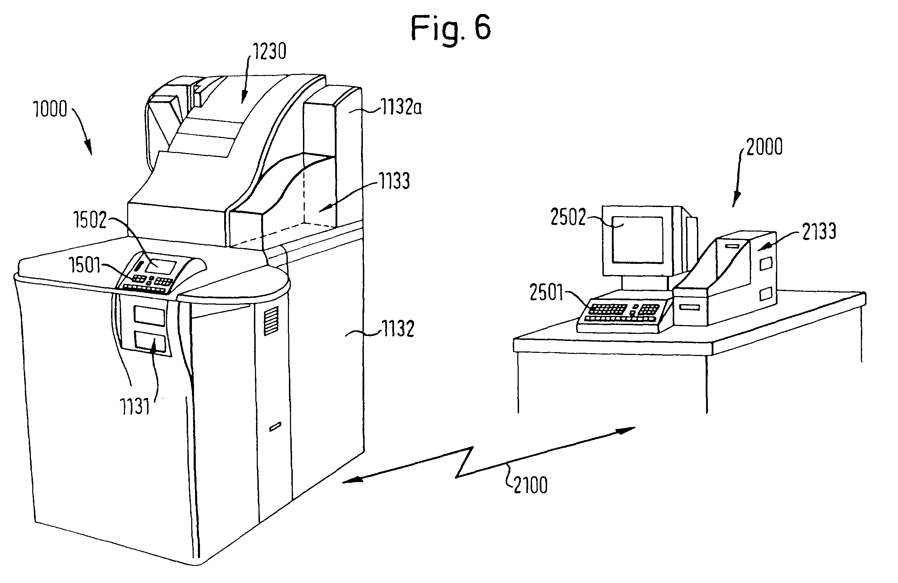

Gemäss der in Figur 6 gezeigten Variante kann das Minilab auch mit einer körperlich separaten Arbeitsstation 2000 versehen sein, welche im wesentlichen eine Abtasteinrichtung 2133 für entwickelte fotografische Filme sowie eine mit dieser zusammenarbeitende elektronische Steuerung 2500 umfasst, die mit einer Tastatur 2501 und einem Monitor 2502 als Benutzer-Schnittstelle ausgestattet ist. Die Abtasteinrichtung 2133 kann vorzugsweise gleich wie diejenige des Minilabs 1000 ausgebildet sein. Die Arbeitsstation 2000 ist mit dem Minilab 1000 über einen beliebigen, durch den Pfeil 2100 symbolisierten Kommunikationskanal (Kabel, Netzwerk, Datenträger etc.) daten- bzw. steuerungsmässig verbunden, wobei die in der Arbeitsstation erzeugten, rohen oder aufbereiteten Bilddaten an das Minilab übertragen werden können. Die Arbeitsstation 2000 entspricht also in ihrer Funktion im wesentlichen einem der in Fig. 2 gezeigten (ohne Entwicklungsvorrichtung ausgestatteten) Eingabemodule. Es können selbstverständlich auch mehrere Arbeitsstationen 2000 mit dem Minilab 1000 zusammenarbeiten. Umgekehrt können auch mehrere Minilabs 1000 von einer oder mehreren Arbeitsstationen 2000 bedient werden, z.B. wenn diese für die Ausgabe auf verschiedenen Kopie-Formaten eingerichtet sind oder zur Auslastungsoptimierung. Die weiter vorne ausgeführten diesbezüglichen generellen Überlegungen und Möglichkeiten gelten sinngemäss auch für die Minilab-Ausführungsvariante des erfindungsgemässen Bildherstellungssystems.

Das Minilab 1000 kann ferner auch mit einigen oder allen Eingangs- und Ausgangsschnittstellen 120 bzw. 220 und Einlese- und Aufzeichnungsvorrichtungen 150, 160 bzw. 250, 260 des Ausführungsbeispiels gemäss Figur 2 ausgestattet sein. Auch diesbezüglich gelten die zu letzterem gemachten Erläuterungen vollumfänglich auch für die Ausführungsvariante der Erfindung als Minilab. Schliesslich kann die Aufbereitung der rohen Bilddaten in eine für die Ausgabe geeignete Form und/oder die bewusste Veränderung des Bildinhalts (eigentliche Bildbearbeitung) auch bereits in der Arbeitsstation 2000 erfolgen, d.h. die Steuerung 2500 der Arbeitsstation 2000 kann eine Bilddaten-Aufbereitungseinrichtung analog derjenigen im Minilab 1000 enthalten oder deren Funktionen implementieren.

Im folgenden werden der Aufbau und die Funktionsweise der Abtasteinrichtung 1133 des Minilabs 1000 näher erläutert.

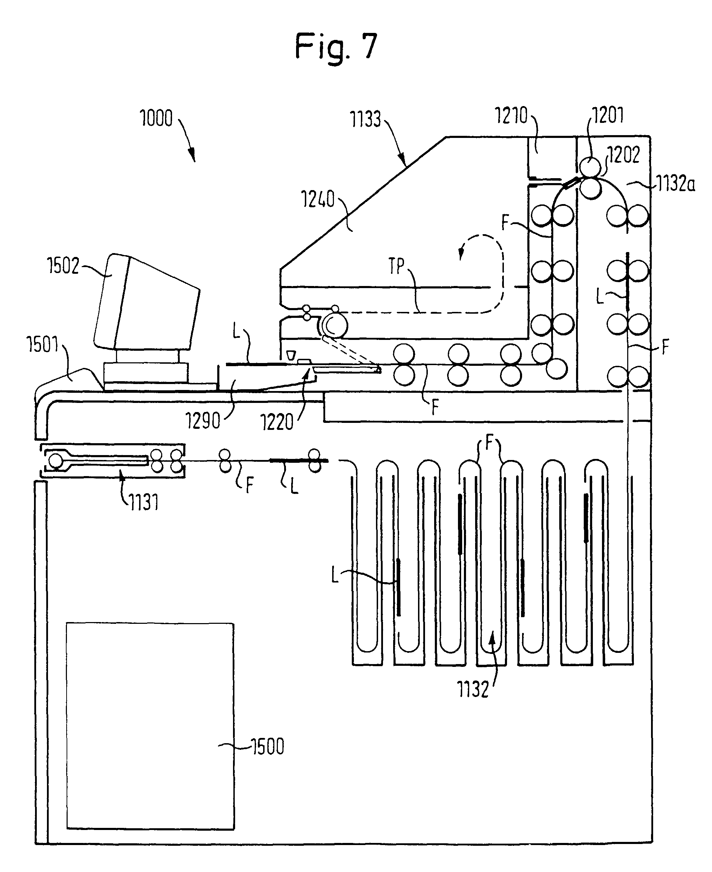

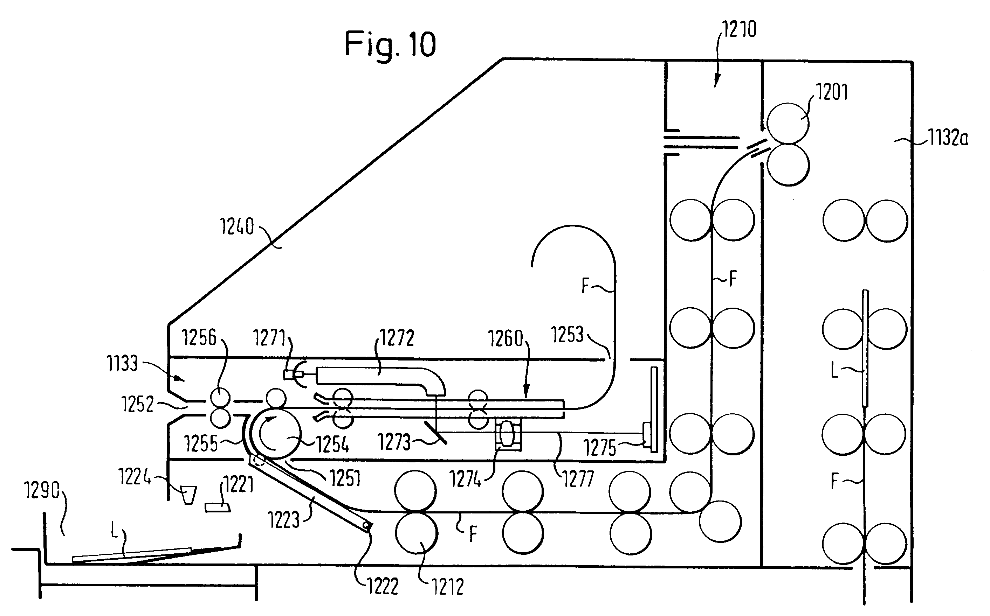

Wie aus Fig. 7 erkennbar, wird ein in die Ladestation 1131 des Minilabs 1000 eingelegter, üblicherweise in einer Patrone enthaltener und in einer separaten Station zuvor mit einer Leaderkarte L verbundener belichteter Film F in konventioneller Weise automatisch aus der Patrone entnommen und an der Leaderkarte L hängend durch die Entwicklungs- und Trocknungsvorrichtung 1132/1132a transportiert. Der entwickelte und getrocknete Film F verlässt die Entwicklungs- und Trocknungsvorrichtung 1132/1132a schliesslich mit der Leaderkarte L voran durch einen von einem Transportwalzenpaar 1201 gebildeten Austrittsspalt 1202. Von hier gelangt der entwickelte Film F zusammen mit der Leaderkarte L durch einen hinter und unter der Abtasteinrichtung vorbeiführenden Führungskanal 1210 zu einer Schneidestation 1220, in der die Leaderkarte L abgetrennt und einem Ablagebehälter 1290 zugeführt wird. Der so von der Leaderkarte L abgetrennte Film F wird dann der Abtasteinrichtung 1133 zugeführt und in dieser hochauflösend fotoelektrisch abgetastet und gelangt schliesslich (Fig. 10) in einen an der Abtasteinrichtung vorgesehenen Filmauffangbehälter 1240.

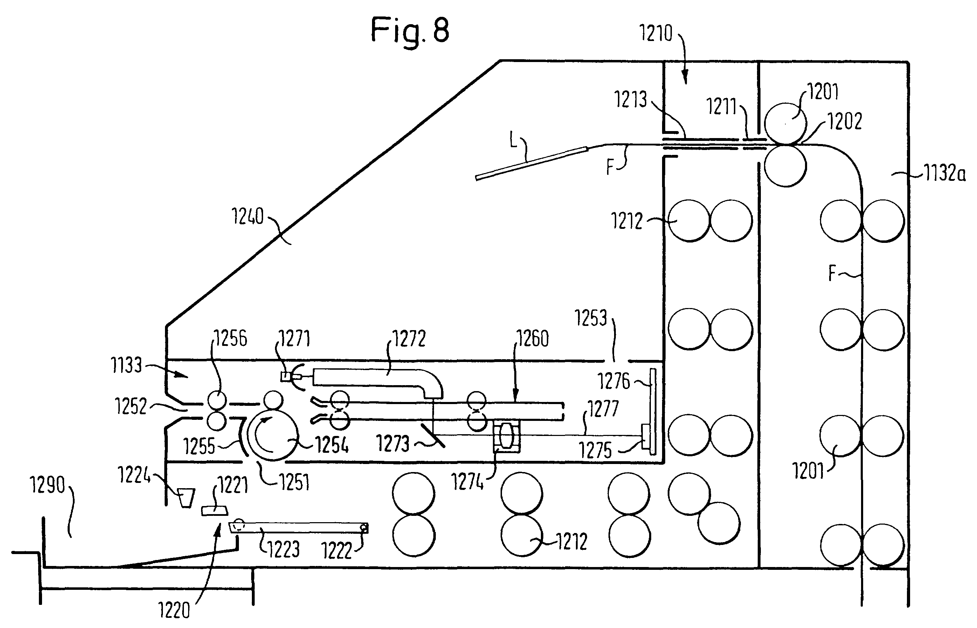

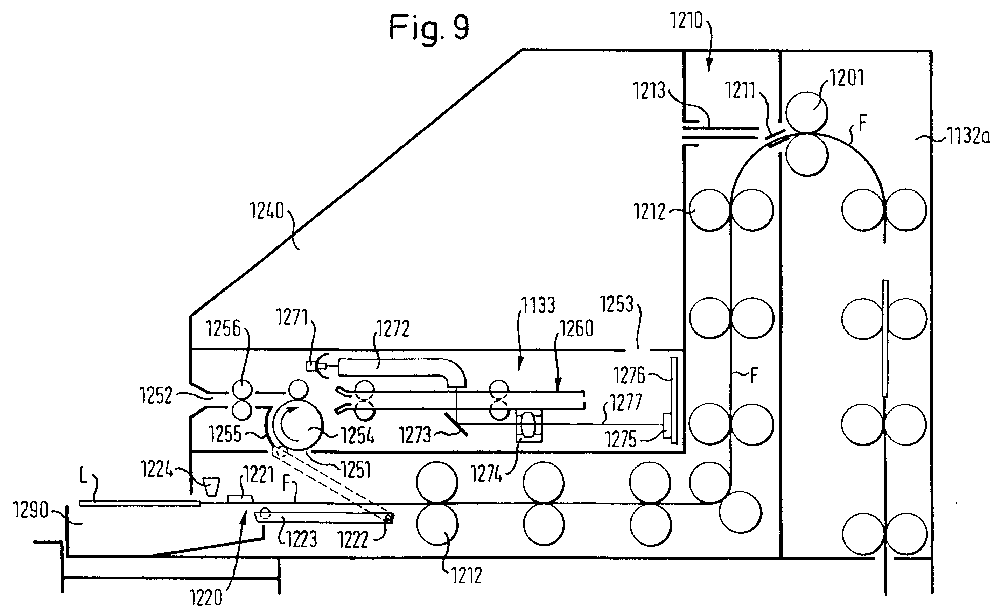

Am Austrittsspalt 1202 der Trocknungsvorrichtung 1132a ist eine erste Filmweiche 1211 vorgesehen, mittels welcher der austretende Film wahlweise entweder dem ersten einer Reihe von im Führungskanal 1210 angeordneten Transportwalzenpaaren 1212 oder einer Führungsbrücke 1213 zugeführt werden kann, welch letztere die Leaderkarte L mit dem an ihr befestigten Film F direkt in den Filmauffangbehälter 1240 leitet. Letzteres ist z.B. dann der Fall, wenn der Film nur entwickelt, aber nicht abgetastet werden soll (Fig. 8). Üblicherweise wird der Film F jedoch durch den Führungskanal 1210 zur Schneidestation 1220 und von dort weiter in die Abtasteinrichtung 1133 geleitet (Figuren 9 und 10).

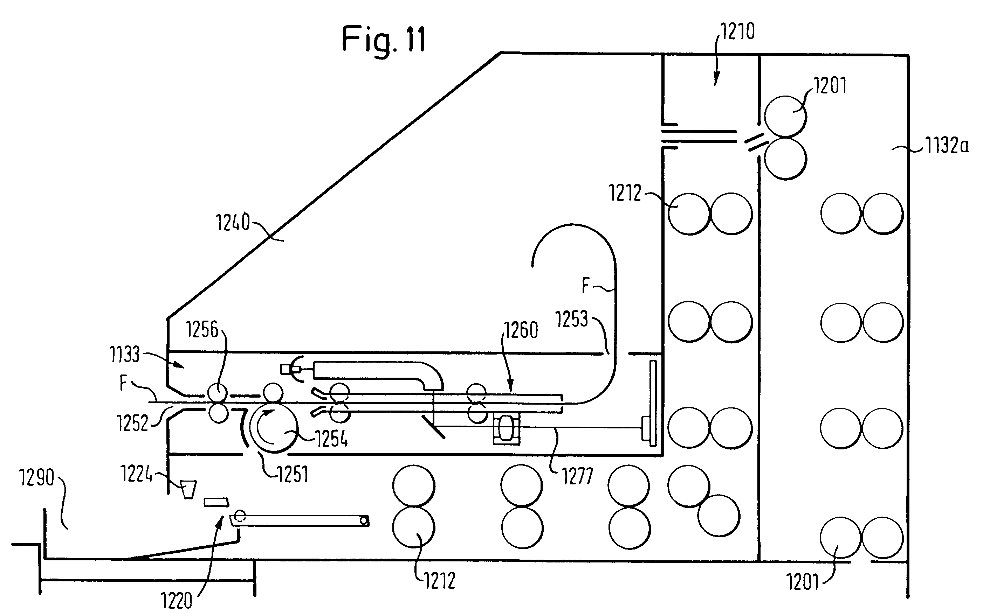

Die Abtasteinrichtung 1133 besitzt zwei Eingänge 1251 und 1252 und einen Ausgang 1253, welch letzterer in den Filmauffangbehälter 1240 führt. (Ausgangsseitig vorhandene Umlenkmittel für den Film sind der Übersichtlichkeit halber nicht dargestellt.) Durch den in der Zeichnung unteren Eingang 1251 wird der in der Schneidestation 1220 von der Leaderkarte L abgetrennte Film F in die Abtasteinrichtung eingeführt und dann mittels eines Transportrollenpaars 1254 und eines Leitblechs 1255 in eine horizontale Transportbahn umgelenkt (Fig. 10). Durch den vorderen Eingang 1252 kann der Abtasteinrichtung 1133, unterstützt durch ein weiteres Transportrollenpaar 1256, ein entwickelter Filmstreifen (ohne Leaderkarte) direkt manuell zugeführt werden (Fig. 11). Letzteres ist z.B. für Nachbestellaufträge erforderlich.

Die Schneidestation 1220 umfasst einen feststehenden Messerbalken 1221 und ein um eine Achse 1222 schwenkbares Messer 1223, das sich normalerweise in der in Fig. 8 gezeigten Position befindet. Wenn eine Leaderkarte L mit dem an ihr befestigten Film F durch den Führungskanal 1210 ankommt, wird sie unter dem festen Messerbalken 1221 und einer Lichtschranke 1224 hindurch in den Ablagebehälter 1290 weitertransport (Fig. 9). Gesteuert durch die Lichtschranke 1224 wird dann das schwenkbare Messer 1223 nach oben in die in Fig. 10 gezeigte Position bewegt, wobei der Film F von der Leaderkarte L abgetrennt wird. Dann wird der Film F durch den unteren Eingang 1251 soweit in die Abtasteinrichtung 1133 hineintransportiert, bis er schliesslich vom Transportwalzenpaar 1254 erfasst und von diesem weitertransportiert wird. Das schwenkbare Messer 1223 hat also eine Doppelfunktion: Zum einen trennt es die Leaderkarte L vom Film F ab und zum anderen dient es als Umlenkweiche für den Film.

Neben den genannten Komponenten befinden sich in der Abtasteinrichtung 1133 eine gemäss einem weiteren wichtigen Aspekt der Erfindung speziell ausgebildete Filmbühne 1260 zur Führung und zum Transport des Films F sowie die eigentliche fotoelektrische Abtastvorrichtung, welche den Film mit hoher Auflösung punktweise bezüglich seiner optischen Transmissionseigenschaften auszumessen (scannen) gestattet. Die eigentliche Abtastvorrichtung (Fig. 8) umfasst eine Lichtquelle 1271, einen Lichtleiter 1272 in Form eines flachen Bündels von Lichtleitfasern, einen Umlenkspiegel 1273, eine Abbildungsoptik 1274, einen Sensor 1275 in Form einer CCD- oder Fotodioden-Zeile und eine zugehörige Elektronik 1276, welche den Sensor 1275 ansteuert und die von diesem erzeugten Signale in eine durch einen Rechner verarbeitbare Form bringt. Die Lichtquelle 1271, der Lichtleiter 1272, der Umlenkspiegel 1273, der Sensor 1275 und die Elektronik 1276 sind ortsfest in der Abtasteinrichtung 1133 angeordnet, die Abbildungsoptik 1274 befindet sich auf der Filmbühne 1260, welche, wie weiter unten noch erläutert wird, beweglich in der Abtasteinrichtung montiert ist.

Abgesehen von der speziellen Anordnung ihrer einzelnen Teile ist die Abtastvorrichtung 1270 konzeptions- und fünktionsmässig im wesentlichen konventionell. Über die Lichtquelle 1271 und den Lichtleiter 1272 wird der auf der Filmbühne 1260 befindliche Film F zeilenweise längs eines sich quer zur Filmtransportrichtung erstreckenden schmalen Abtaststreifens beleuchtet. Dieser wird von der gegenüberliegenden Seite des Films durch ein Fenster in der Filmbühne hindurch über den Umlenkspiegel 1273 und die Abbildungsoptik 1274 auf den zeilenförmigen Sensor 1275 abgebildet, welcher das empfangene Licht in entsprechende elektrische Signale umwandelt. Der Abtaststrahlengang ist in Fig. 8 mit 1277 bezeichnet. Die örtliche Auflösung der Abtastung in Richtung des Abtaststreifens (quer zur Filmtransportrichtung) ist durch Grösse und Abstände der einzelnen lichtempfindlichen Elemente des Sensors 1275 gegeben, diejenige in Transportrichtung durch die Breite des Abtaststreifens sowie die Transportgeschwindigkeit des Films. Die Farbseparation kann durch Verwendung eines entsprechend farbselektiven Sensors (z.B. Farbfernsehkamera) oder durch Verwendung geeigneter Farbfilter erreicht werden. Gewünschtenfalls kann auch eine spektrale Abtastung erfolgen, dazu braucht im Abtaststrahlengang lediglich ein dispersives Element angeordnet und ein Sensor z.B. in Form eines zweidimensionalen Felds von lichtempfindlichen Elementen eingesetzt zu werden. Für die fotoelektrische Ausmessung von Filmen geeignete Abtastvorrichtungen sind an sich in zahlreichen Varianten bekannt und bedürfen deshalb soweit keiner näheren Erläuterung.

Damit bei der hochauflösenden fotoelektrischen Abtastung des Films F keine Positionierungsfehler auftreten, muss der Film wenigstens im Bereich der Abtaststelle sehr exakt geführt werden. Dies ist nur möglich, wenn die dafür vorgesehenen Führungsorgane exakt auf die Dimensionen (Breite) des Films abgestimmt sind. Bei einem Wechsel des Filmformats müssen also auch die Führungsorgane entsprechend angepasst werden, was nichts anderes bedeutet, als dass entweder für jedes Filmformat eine eigene Abtasteinrichtung vorgesehen sein oder die Abtasteinrichtung 1133 bei jedem Wechsel des Filmformats umgerüstet werden muss. Da aber in der Praxis mit häufig wechselnden Filmformaten gerechnet werden muss, wäre dies sehr umständlich. Gemäss einem weiteren wichtigen Aspekt der Erfindung ist daher die Filmbühne 1260 der Abtasteinrichtung 1133 als Wechselbühne für zwei oder mehrere Filmformate ausgebildet. Die Wechselbühne ist dabei mit zwei oder mehreren Anordnungen von Führungsorganen für je ein Filmformat ausgestattet, und diese Anordnungen von Führungsorganen werden je nach Filmformat selektiv in den Transportpfad des Films eingeschaltet, so dass jeder Film jeweils immer von den richtigen, auf sein Format abgestimmten Führungsorganen exakt geführt wird und Positionierungsfehler bei der Abtastung vermieden werden. Die wechselweise Auswahl der einzelnen Anordnungen von Führungsorganen erfolgt dabei natürlich vollautomatisch, indem die Filmbreite an geeigneter Stelle des Transportwegs des Films z.B. mittels einer Lichtschrankenanordnung oder eines anderen Fühlers bestimmt wird und die Wechselbühne entsprechend motorisch verstellt wird. Selbstverständlich ist auch eine Verstellung von Hand möglich. Alternativ können selbstverständlich auch mehrere Filmbühnen vorgesehen sein, die selektiv in den Transportpfad eingebracht werden können.

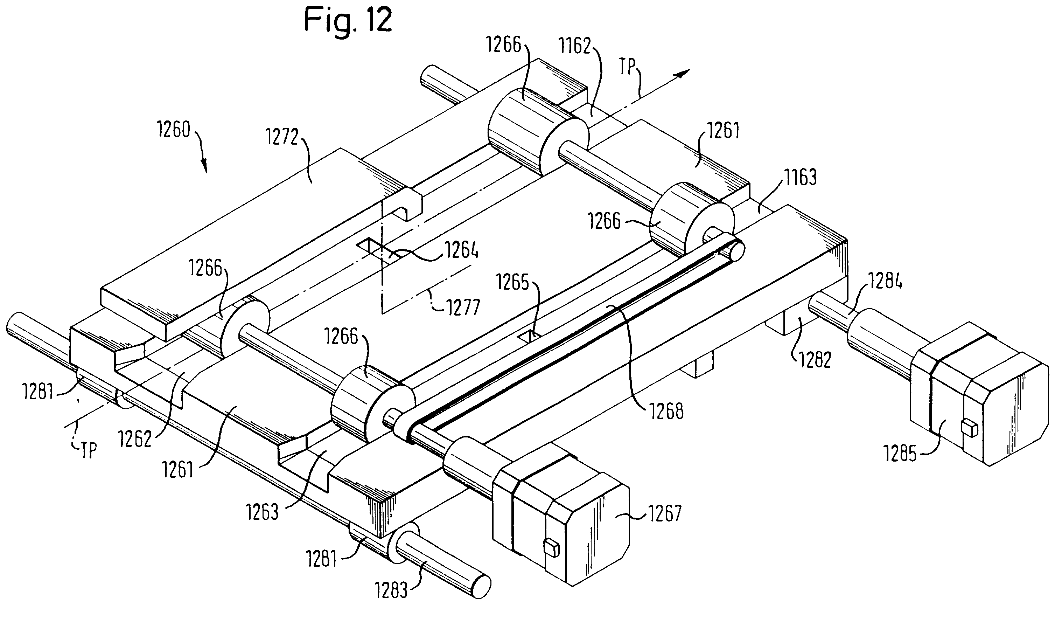

Die Figuren 12-15 zeigen den Aufbau der in diesem Ausführungsbeispiel als Wechselbühne für zwei Filmformate (z.B. 135 und APS) ausgebildeten Filmbühne 1260 im Detail.

Die Filmbühne 1260 umfasst eine Grundplatte 1261, in der zwei oben offene Führungskanäle 1262 und 1263 unterschiedlicher Breite eingelassen sind. Die Breiten der Führungskanäle sind exakt z.B. auf Filme des 135-er-Formats und des APS-Formats abgestimmt. Jeweils etwa in der Mitte der beiden Führungskanäle ist in der Grundplatte 1261 ein schmales Abtastfenster 1264 bzw. 1265 ausgespart, durch welches hindurch die Abtastung der Filme erfolgt. Auf der Grundplatte 1261 sind vier paarweise auf gemeinsamen Wellen sitzende Antriebsrollen 1266 drehbar gelagert und durch einen gemeinsamen Antriebsmotor 1267 direkt bzw. über einen Zahnriemen 1268 angetrieben. Jeweils zwei Antriebsrollen 1266 greifen in die beiden Führungskanäle 1262 und 1263 hinein und dienen zum Transport des im jeweiligen Kanal geführten Films F. Die Grundplatte 1261 ist an einer Seite mit zwei Gleitlagern 1281 und an der anderen Seite mit zwei Spindellagern 1282 ausgestattet. Die Geitlager 1281 gleiten auf einer sich quer zur Filmtransportrichtung erstreckenden, ortsfest in der Abtasteinrichtung 1133 montierten Gleitstange 1283. Die Spindellager 1282 nehmen eine zur Gleitstange 1283 parallele drehbare Spindel 1284 auf, die von einem ebenfalls ortsfesten Spindelmotor 1285 drehbar angetrieben ist. Mit Hilfe des Spindelmotors 1285 kann die Grundplatte 1261 quer zur Transportrichtung des Films F so verstellt werden, dass jeweils der eine oder der andere der beiden Führungskanäle 1262 bzw. 1263 selektiv in den durch die in der Abtasteinrichtung ortsfesten Führungs- und Transportorgane festgelegten Transportpfad des Films F eingebracht werden kann. Der Transportpfad des Films ist in Fig. 12 durch die strichpunktierte Linie TP angedeutet, wobei hier der Führungskanal 1262 im Transportpfad liegt.

Der optisch mit der Lichtquelle 1271 verbundene Lichtleiter 1272 ist ortsfest so angeordnet, dass sein Lichtaustrittsende symmetrisch oberhalb des Transportpfads TP liegt und mit dem Abtastfenster 1264 (bzw. 1265) des im Transportpfad TP befindlichen Führungskanals 1262 (bzw. 1263) fluchtet. Der Umlenkspiegel 1273 befindet sich unterhalb des Abtastfensters ortsfest genau unter dem Lichtaustrittsende des Lichtleiters 1272. Die Abbildungsoptik der Abtastvorrichtung ist an der Unterseite der Grundplatte 1261 montiert, wobei für jeden der beiden Führungskanäle 1262 und 1263 eine eigene Abbildungsoptik 1274a bzw. 1274b vorgesehen ist. Je nach Stellung der Grundplatte 1261 kommt also entweder nur die Abbildungsoptik 1274a oder die Abbildungsoptik 1274b zum Einsatz. Die Abbildungsoptiken 1274a und 1274b sind dabei so justiert, dass sie über den ortsfesten gemeinsamen Umlenkspiegel 1273 jeweils ein scharfes Bild des beleuchteten Streifens des über ihnen liegenden Films auf dem gemeinsamen, ebenfalls ortsfesten Sensor 1275 erzeugen.

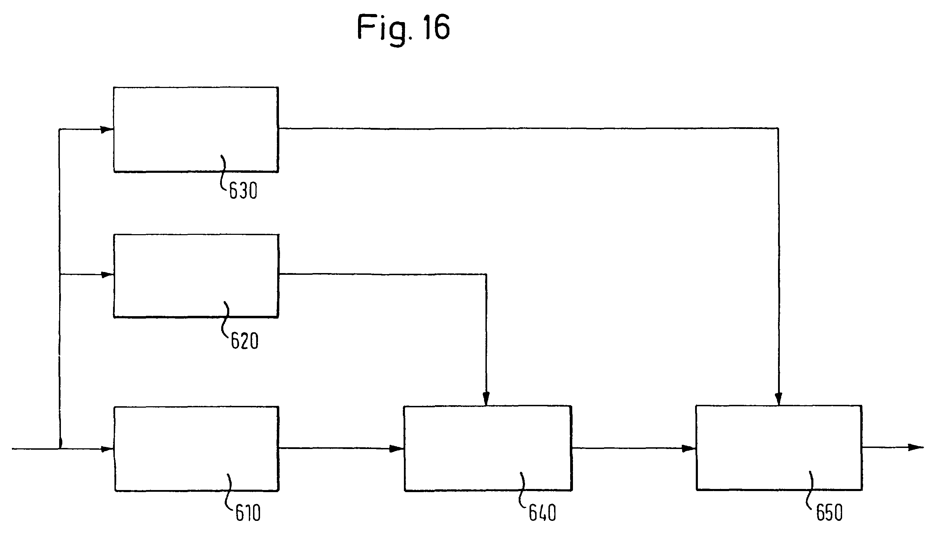

Im folgenden wird anhand der Figur 16 noch etwas detaillierter erläutert, in welcher Weise die von der Abtasteinrichtung erzeugten rohen Bilddaten durch die Bilddaten-Aufbereitungseinrichtung 600 im Hinblick auf die Ausgabe auf ein gewünschtes Ausgabemedium (z.B. mittels eines Farbdruckers oder einer digitalen Belichtungseinrichtung) weiter verarbeitet werden können.

Die von der Abtasteinrichtung erzeugten oder anderswie zugeführten rohen Bilddaten der einzelnen Bilder eines Filmstreifens werden in einer Speicherstufe 610 zwischengespeichert und gleichzeitig einer Analysestufe 620 sowie einer Detektionsstufe 630 verschiedenen Auswertungen unterzogen. Die genannten und die im folgenden noch erwähnten Stufen sind dabei als Verarbeitungsstufen zu versehen, welche durch entsprechende Programmteile der Aufbereitungseinrichtung 600 in Verbindung mit einem Datenspeicher implementiert sind. In der Analysestufe 620 werden die rohen Bilddaten mehrerer oder aller Bilder des Filmstreifens auf die Charakteristika des verwendeten Filmmaterials und Charakteristika des Bildinhalts untersucht, und anhand dieser Charakteristika werden Parameter für die Bildverbesserung (image enhancement) bestimmt. Dazu gehören Parameter für die Farb- und Dichtesteuerung, die Schärfeverbesserung und die Kontraststeuerung. Diese Analyse erfolgt nach an sich bekannten Methoden, wie sie z.B. in US-A-5 119 125 und US-A-5 365 353 im Detail beschrieben sind. Die Offenbarung dieser Druckschriften wird hiermit ausdrücklich zum Bestandteil der vorliegenden Beschreibung erklärt. In der Detektionsstufe 630 werden aus den rohen Bilddaten die Längen und Breiten der einzelnen auf dem Film enthaltenen Bilder berechnet und daraus Bildauflösungsparameter gebildet. Dies ist z.B. durch an sich bekannte Kantendetektionsverfahren möglich.

Wenn die in den Stufen 620 und 630 durchgeführten Berechnungen abgeschlossen sind, werden die in der Speicherstufe 610 zwischengespeicherten Bilddaten bildweise in einer Bildverbesserungsstufe 640 mit den in der Analysestufe 620 berechneten Parametern verrechnet, um die für die Farb-, Dichte-, Schärfe- und Kontraststeuerung erfoderlichen Korrekturen zu erreichen. Diese Verrechnung erfolgt ebenfalls wieder nach den in den genannten Druckschriften US-A-5 119 125 und US-A-5 365 353 beschriebenen, an sich bekannten Methoden. Die so korrigierten Bilddaten werden schliesslich bildweise in einer Grössenveränderungsstufe 650 mit den in der Detektionsstufe 630 bestimmten Bildauflösungsparametern verrechnet, wobei die räumliche Auflösung der Bilddaten neu so berechnet wird, dass die Bilder in der gewünschten Grösse auf das Ausgabemedium ausgegeben werden können. Die so fertig verarbeiteten Bilddaten werden dann entweder gespeichert oder bildweise an die gewünschte Ausgabeeinrichtung, speziell einen Farbdrucker oder eine digitale Belichtungseinrichtung weitergeleitet.

Das beschriebene Bildherstellungssystem ist aufgrund seiner Fähigkeit, Bilddaten und Begleitdaten von verschiedensten Eingabemedien entgegenzunehmen und auf verschiedenste Ausgabemedien auszugeben, in seiner Anwendung äusserst flexibel. Durch den Einsatz mehrerer unterschiedlich ausgelegter Eingabe- und Ausgabemodule kann auf eine zeitaufwendige Vorsortierung nach verschiedenen Filmtypen und Kopie-Formaten und -qualitäten verzichtet werden. Durch die räumliche und zeitliche Entkopplung der Bilddaten-Erfassung und Bilddaten-Ausgabe entsteht eine grosse zeitliche und räumliche Flexibilität und können insbesondere die Bilddaten-Erfassung und die Bilddaten-Ausgabe mit unterschiedlichen, dem jeweiligen Prozess optimal angepassten Geschwindigkeiten erfolgen. Durch die Speicherung der Bilder als digitale Bilddaten entfallen kosten- und platzaufwendige mechanische Zwischenspeicher für Film und Kopierpapier. Durch die Integration der Abtasteinrichtung in die Eingabemodule und der digitalen Belichtungseinrichtung in die Ausgabemodule ist ein Printer im klassischen Sinn überflüssig.

Darüber hinaus hat das erfindungsgemässe Bildherstellungssystem noch den Vorteil, dass eine eventuell erforderliche oder gewünschte Bildbearbeitung sehr einfach realisierbar ist. So können beispielsweise von den gespeicherten Bilddaten sog. Index-Prints erzeugt werden, wobei auch die Überlagerung von passenden Bildmasken sehr einfach möglich ist. Ferner können z.B. auch Grusskarten und dergleichen, also Kombinationen des eigentlichen Bildinhalts mit festen oder veränderlichen Vorgabe-Bildinhalten oder Texten, hergestellt werden. Ausschnittsvergrösserungen, ggf auch verdreht, lassen sich ebenfalls durch digitale Bildbearbeitung einfach realisieren. Schliesslich können die Bilder durch entsprechende Bearbeitung der sie repräsentierenden Bilddaten auch bewusst verändert werden ("Image Enhancement"), beispielsweise etwa das an sich bekannte Auskorrigieren von roten Augen bei Abbildungen von menschlichen Gesichtern.

## Patentansprüche

1. Auf digitaler Bildverarbeitung basierendes System zur Herstellung von Kopien auf fotografischem Kopiermaterial von Kopiervorlagen, mit den folgenden Merkmalen:
a) eine Eingabeeinrichtung (100) zur Erfassung digitaler, die herzustellenden Bilder repräsentierenden Bilddaten von einem Eingabemedium, insbesondere einem entwickelten fotografischen Film, sowie von den Bilddaten zugeordneten Begleitdaten,
b) einen Datenspeicher (300) zur Zwischenspeicherung der erfassten und gegebenenfalls aufbereiteten Bilddaten und der Begleitdaten,
c) eine Ausgabeeinrichtung (200) zur Ausgabe der Bilddaten auf ein Ausgabemedium, insbesondere ein fotografisches Kopiermaterial,
d) eine Steuereinrichtung (400), welche die Eingabeeinrichtung, den Datenspeicher und die Ausgabeeinrichtung steuert und verbindet und den Datenfluss zwischen diesen Einrichtungen nach Massgabe der den Bilddaten zugeordneten Begleitdaten verwaltet und kontrolliert,
e) die Eingabeeinrichtung (100) weist mindestens eine Schnittstelle (120) zu einem elektronischen Datennetzwerk zum Einlesen von in diesem Datennetzwerk zur Verfügung gestellten Bilddaten und ggf. diesen zugeordneten Begleitdaten auf, und
f) die Ausgabeeinrichtung (200) weist mindestens eine Schnittstelle (220) zur Einspeisung der im Datenspeicher (300) zwischengespeicherten Bilddaten und ggf. der diesen zugeordneten Begleitdaten in ein elektronisches Datennetzwerk auf.

2. System nach Anspruch 1, gekennzeichnet durch eine an die Steuereinrichtung (400) angeschlossene und mit dieser zusammenwirkende digitale Aufbereitungseinrichtung (600) für die erfassten Bilddaten.

3. System nach einem der vorangehenden Ansprüche, dadurch gekennzeichnet, dass die Eingabeeinrichtung (100) mindestens eine Eingabestation (110) zur Erfassung der den Bilddaten zugeordneten Begleitdaten aufweist.

4. System nach einem der vorangehenden Ansprüche, dadurch gekennzeichnet, dass die Eingabeeinrichtung (100) mindestens eine Abtasteinrichtung (133; 143) zur bildmässigen fotoelektrischen Abtastung von körperlichen Kopiervorlagen und zur Erzeugung von die Kopiervorlagen repräsentierenden Bilddaten aufweist.

5. System nach einem der vorangehenden Ansprüche, dadurch gekennzeichnet, dass die Eingabeeinrichtung (100) mindestens eine Einlesevorrichtung (150; 160) für auf einem digitalen Datenträger aufgezeichnete Bilddaten und ggf. diesen zugeordneten Begleitdaten aufweist.

6. System nach einem der vorangehenden Ansprüche, dadurch gekennzeichnet, dass die Ausgabeeinrichtung (200) mindestens einen Farbdrucker oder eine digitale Belichtungseinrichtung (231; 241) zur bildmässigen Aufbelichtung der im Datenspeicher (300) zwischengespeicherten Bilddaten auf ein fotografisches Kopiermaterial aufweist.

7. System nach einem der vorangehenden Ansprüche, dadurch gekennzeichnet, dass die Ausgabeeinrichtung (200) mindestens eine Aufzeichnungsvorrichtung (250; 260) zur Aufzeichnung der im Datenspeicher (300) zwischengespeicherten Bilddaten und ggf. der diesen zugeordneten Begleitdaten auf einen digitalen Datenträger aufweist.

8. System nach einem der vorangehenden Ansprüche, dadurch gekennzeichnet, dass die Eingabeeinrichtung (100) mindestens ein mit der Steuereinrichtung (400) zusammenwirkendes Eingabemodul (130; 140) mit einer Entwicklungsvorrichtung (132; 142) für fotografische Filme sowie einer mit dieser zu einer körperlichen Einheit verbundenen oder in diese integrierten Abtasteinrichtung (133; 143) zur bildmässigen fotoelektrischen in-line-Abtastung der entwickelten Filme und zur Erzeugung von die auf den Filmen enthaltenen Kopiervorlagen repräsentierenden Bilddaten aufweist.

9. System nach Anspruch 8, dadurch gekennzeichnet, dass die Eingabeeinrichtung (100) zwei oder mehrere mit der Steuereinrichtung (400) zusammenwirkende, insbesondere unterschiedliche Filmtypen verarbeitende Eingabemodule (130, 140) aufweist.

10. System nach einem der Ansprüche 8 oder 9, dadurch gekennzeichnet, dass die Eingabeeinrichtung (130) wenigstens ein mit der Steuereinrichtung (400) zusammenwirkendes Eingabemodul für bereits entwickelte fotografische Filme aufweist, welches mit einer Abtasteinrichtung zur bildmässigen fotoelektrischen in-line-Abtastung der entwickelten Filme und zur Erzeugung von die auf den Filmen enthaltenen Kopiervorlagen repräsentierenden Bilddaten versehen ist.

11. System nach einem der vorangehenden Ansprüche, dadurch gekennzeichnet, dass die Ausgabeeinrichtung (200) mindestens ein mit der Steuereinrichtung (400) zusammenwirkendes Ausgabemodul (230; 240) mit einer Entwicklungsvorrichtung (232; 242) für fotografisches Kopiermaterial sowie einer mit dieser zu einer körperlichen Einheit verbundenen oder in diese integrierten digitalen Belichtungseinrichtung (231; 241) zur bildmässigen in-line-Aufbelichtung der im Datenspeicher (300) zwischengespeicherten Bilddaten auf das noch unentwickelte fotografische Kopiermaterial aufweist.

12. System nach Anspruch 11, dadurch gekennzeichnet, dass die Ausgabeeinrichtung (200) zwei oder mehrere mit der Steuereinrichtung (400) zusammenwirkende, insbesondere unterschiedliches Kopiermaterial verarbeitende Ausgabemodule (230, 240) aufweist, und dass die Steuereinrichtung (400) diese Ausgabemodule (230, 240) nach Massgabe ihrer Auslastung bzw. Verfügbarkeit und nach Massgabe der den Bilddaten zugeordneten Begleitdaten selektiv mit den im Datenspeicher (300) zwischengespeicherten Bilddaten beaufschlagt.

13. System nach Anspruch 12, dadurch gekennzeichnet, dass die Ausgabemodule (230, 240) eine gemeinsame mehrbahnige Entwicklungsvorrichtung aufweisen, wobei jeder Bahn der Entwicklungsvorrichtung eine eigene digitale Belichtungseinrichtung zugeordnet ist.

14. System nach einem der vorangehenden Ansprüche, gekennzeichnet durch eine mit der Steuereinrichtung (400) zusammenwirkende und von dieser gesteuerte Sammeleinrichtung (700), welche die von der Ausgabeeinrichtung (200) mit Bilddaten beaufschlagten Ausgabemedien nach Massgabe der den erfassten Bilddaten zugeordneten Begleitdaten ordnet.

15. System nach Anspruch 5, gekennzeichnet durch eine mit der Steuereinrichtung (400) zusammenwirkende und von dieser gesteuerte Sammeleinrichtung (700), welche die von der Ausgabeeinrichtung (200) mit Bilddaten beaufschlagten Ausgabemedien nach Massgabe der den erfassten Bilddaten zugeordneten Begleitdaten ordnet und den zugehörigen, von der Einlesevorrichtung eingelesenen digitalen Datenträgern zuordnet.

16. System nach einem der Ansprüche 8 bis 10, gekennzeichnet durch eine mit der Steuereinrichtung (400) zusammenwirkende und von dieser gesteuerte Sammeleinrichtung (700), welche die von der Ausgabeeinrichtung (200) mit Bilddaten beaufschlagten Ausgabemedien nach Massgabe der den erfassten Bilddaten zugeordneten Begleitdaten ordnet und den zugehörigen, von dem bzw. den Eingabemodulen (130, 140) verarbeiteten fotografischen Filmen zuordnet.

17. System nach einem der Ansprüche 8 bis 10 und einem der Ansprüche 11 bis 13, gekennzeichnet durch eine mit der Steuereinrichtung (400) zusammenwirkende und von dieser gesteuerte Sammeleinrichtung (700), welche die von dem bzw. den Ausgabemodulen (230, 240) erzeugten fotografischen Kopien nach Massgabe der den erfassten Bilddaten zugeordneten Begleitdaten ordnet und den zugehörigen, von dem bzw. den Eingabemodulen (130 ,140) verarbeiteten fotografischen Filmen zuordnet.

18. System nach Anspruch 2 und einem der Ansprüche 8 bis 10 und einem der Ansprüche 11 bis 13, dadurch gekennzeichnet, dass die mit der Steuereinrichtung (400) zusammenwirkende digitale Aufbereitungseinrichtung (600) die erfassten Bilddaten für die Weiterverarbeitung in der bzw. den digitalen Belichtungseinrichtungen (231, 241) oder der bzw. den Farbdruckern aufbereitet.

19. System nach einem der vorangehenden Ansprüche, dadurch gekennzeichnet, dass es als Minilab (1000) ausgebildet ist und, zu einer körperlichen Einheit zusammengefasst, eine Film-Ladestation (1131), eine Filmentwicklungs- und Trocknungseinrichtung (1132/1132a), eine fotoelektrische Abtasteinrichtung (1133), ein digitales Ausgabemodul (1230) und eine diese Komponenten steuernde Steuerung (1500) umfasst, wobei die Ladestation (1131), die Entwicklungs- und Trocknungseinrichtung (1132/1132a) und die fotoelektrische Abtasteinrichtung (1133) in-line zusammenwirken.

20. System nach Anspruch 19, dadurch gekennzeichnet, dass die fotoelektrische Abtasteinrichtung (1133) für die Verarbeitung von Filmtypen unterschiedlichen Formats ausgebildet ist und insbesondere mit einer Wechselbühne (1260) ausgestattet ist, welche zur mechanischen Führung und Positionierung von Filmen mindestens zweier unterschiedlicher Formate ausgebildet ist.

## Claims

1. System based on digital image processing for the production of copies of copying originals on photographic copying material, having the following features:
a) an input device (100) for the recording of digital image data, which represents the images to be produced, from an input medium, in particular a developed photographic film, and accompanying data associated with the image data,
b) a data memory (300) for the intermediate storage of the recorded and, if appropriate, prepared image data and the accompanying data,
c) an output device (200) for the output of the image data onto an output medium, in particular a photographic copying material,
d) a control device (400), which controls and connects the input device, the data memory and the output device and which administers and controls the data flow between these devices as specified in the accompanying data associated with the image data;
e) the input device (100) has at least one interface (120) to an electronic data network for reading in image data made available in this data network and, if appropriate, accompanying data associated with them, and
f) the output device (200) has at least one interface (220) for feeding in the image data and, if appropriate, the accompanying data associated with them in an electronic data network into intermediate storage in the data memory (300).

2. System according to Claim 1, characterised by a digital preparation device (600), which is connected to the control device (400) and interacts with it, for the recorded image data.

3. System according to one of the preceding claims, characterised in that the input device (100) has at least one input station (110) for recording the accompanying data associated with the image data.

4. System according to one of the preceding claims, characterised in that the input device (100) has at least one scanning device (133; 143) for the imagewise photoelectric scanning of physical copying originals and for generating image data representing the copying originals.

5. System according to one of the preceding claims, characterised in that the input device (100) has at least one read-in appliance (150; 160) for image data recorded on a digital data carrier and, if appropriate, accompanying data associated with these image data.

6. System according to one of the preceding claims, characterised in that the output device (200) has at least one colour printer or a digital exposure device (231; 241) for the imagewise exposure of the image data, which is in intermediate storage in the data memory (300), onto a photographic copying material.

7. System according to one of the preceding claims, characterised in that the output device (200) has at least one recording appliance (250; 260) for recording, on a digital data carrier, the image data, which is in intermediate storage in the data memory (300) and, if appropriate, the accompanying data associated with these image data.

8. System according to one of the preceding claims, characterised in that the input device (100) has at least one input module (130; 140), which interacts with the control device (400), having a development appliance (132; 142) for photographic films and a scanning device (133; 143) - which is connected to the development appliance (132; 142) to form a physical unit or is integrated in it - for the imagewise photoelectric in-line scanning of the developed films and for generating image data representing the copying original contained on the films.

9. System according to Claim 8, characterised in that the input device (100) has two or more input modules (130, 140), which interact with the control device (400) and, in particular, process different film types.

10. System according to one of Claims 8 or 9, characterised in that the input device (130) has at least one input module, which interacts with the control device (400), for already developed photographic films, which input module is provided with a scanning device for the imagewise photoelectric in-line scanning of the developed films and for generating image data representing the copying original contained on the films.

11. System according to one of the preceding claims, characterised in that the output device (200) has at least one output module (230; 240), which interacts with the control device (400), with a development appliance (232; 242) for photographic copying material and an exposure device (231; 241), connected to this development appliance to form a physical unit or integrated into it, for the imagewise in-line exposure of the image data, which is in intermediate storage in the data memory (300), onto the as yet undeveloped photographic copying material.

12. System according to Claim 11, characterised in that the output device (200) has two or more output modules (230; 240), which interact with the control device (400) and process, in particular, different copying material, and in that the control device (400) selectively loads this output module (230, 240), in accordance with its loading or availability and as specified in the accompanying data associated with the image data, with the image data, which is in intermediate storage in the data memory (300).

13. System according to Claim 12, characterised in that the output modules (230, 240) have a common multi-path development appliance, each path of the development appliance having its own digital exposure device associated with it.

14. System according to one of the preceding claims, characterised by a collecting device (700), which interacts with the control device (400) and is controlled by it, which collecting device (700) arranges the output media, which are loaded with image data from the output device (200), as specified in the accompanying data associated with the recorded image data.

15. System according to Claim 5, characterised by a collecting device (700), which interacts with the control device (400) and is controlled by it, which collecting device (700) arranges the output media, which are loaded with image data from the output device (200), as specified in the accompanying data associated with the recorded image data and additionally arranges the associated digital data carrier read in by the read-in appliance.

16. System according to one of Claims 8 to 10, characterised by a collecting device (700), which interacts with the control device (400) and is controlled by it, which collecting device (700) arranges the output media, which are loaded with image data from the output device (200), as specified in the accompanying data associated with the recorded image data and additionally arranges the photographic films processed by the associated input module or modules (130, 140).

17. System according to one of Claims 8 to 10 and one of Claims 11 to 13, characterised by a collecting device (700), which interacts with the control device (400) and is controlled by it, which collecting device (700) arranges the photographic copies generated by the output modules or modules (230, 240) as specified in the accompanying data associated with the recorded image data and additionally arranges the photographic films processed by the associated input module or modules (130, 140).

18. System according to Claim 2 and one of Claims 8 to 10 and one of Claims 11 to 13, characterised in that the digital preparation device (600), which interacts with the control device (400), prepares the recorded image data for the further processing in the digital exposure device or devices (231, 241) or the colour printer or printers.

19. System according to one of the preceding claims, characterised in that it is configured as a minilab (1000) and, combined to form a physical unit, comprises a film loading station (1131), a film development and drying device (1132/1132a), a photoelectric scanning device (1133), a digital output module (1230) and a control system (1500) which controls these components, the loading station (1131), the development and drying device (1132/1132a) and the photoelectric scanning device (1133) interacting in-line.

20. System according to Claim 19, characterised in that the photoelectric scanning device (1133) is configured for the processing of film types of different formats and is, in particular, equipped with a change-over platform (1260), which is configured for the mechanical guidance and positioning of films of at least two different formats.

## Revendications

1. Système utilisant le traitement numérique d'images pour réaliser des tirages d'originaux sur un support de tirage photographique, avec les caractéristiques suivantes :
a) un dispositif d'entrée (100) pour la saisie de données numériques d'image représentant les images à réaliser à partir d'un moyen d'entrée, en particulier d'un film photographique développé, ainsi que de données d'accompagnement associées aux données d'image,
b) une mémoire de données (300) pour le stockage intermédiaire des données d'image saisies et éventuellement mises en forme et des données d'accompagnement,
c) un dispositif de sortie (200) pour la sortie des données d'image sur un moyen de sortie, en particulier sur un support de tirage photographique,
d) un dispositif de commande (400) qui commande et relie le dispositif d'entrée, la mémoire de données et le dispositif de sortie et qui gère et contrôle le flux de données entre ces dispositifs en fonction des données d'accompagnement associées aux données d'image,
e) le dispositif d'entrée (100) comprend au moins une interface (120) avec un réseau électronique de données pour lire des données d'image et éventuellement des données d'accompagnement associées fournies par ce réseau de données, et
f) le dispositif de sortie (200) comprend au moins une interface (220) pour mémoriser dans un réseau électronique de données les données d'image et éventuellement les données d'accompagnement associées placées en stockage intermédiaire dans la mémoire de données (300).

2. Système selon la revendication 1, caractérisé par un dispositif numérique de mise en forme (600) pour les données d'image saisies, ledit dispositif étant connecté au dispositif de commande (400) et coopérant avec lui.

3. Système selon une des revendications précédentes, caractérisé en ce que le dispositif d'entrée (100) comporte au moins une station d'entrée (110) pour saisir les données d'accompagnement associées aux données d'image.

4. Système selon une des revendications précédentes, caractérisé en ce que le dispositif d'entrée (100) comporte au moins un dispositif d'analyse (133 ; 143) pour analyser par voie photoélectrique l'image d'originaux physiques et pour produire des données d'image représentant les originaux.

5. Système selon une des revendications précédentes, caractérisé en ce que le dispositif d'entrée (100) comporte au moins un dispositif de lecture (150 ; 160) pour des données d'image et éventuellement des données d'accompagnement associées qui sont enregistrées sur un support numérique de données.

6. Système selon une des revendications précédentes, caractérisé en ce que le dispositif de sortie (200) comporte au moins une imprimante couleur ou un dispositif numérique d'insolation (231 ; 241) pour reporter sur un support de tirage photographique l'image des données d'image placées en stockage intermédiaire dans la mémoire de données (300).

7. Système selon une des revendications précédentes, caractérisé en ce que le dispositif de sortie (200) comporte au moins un dispositif d'enregistrement (250 ; 260) pour enregistrer sur un support numérique de données les données d'image et éventuellement les données d'accompagnement associées placées en stockage intermédiaire dans la mémoire de données (300).

8. Système selon une des revendications précédentes, caractérisé en ce que le dispositif d'entrée (100) comporte au moins un module d'entrée (130 ; 140) qui coopère avec le dispositif de commande (400) et qui comprend un dispositif de développement (132 ; 142) pour des films photographiques ainsi qu'un dispositif d'analyse (133 ; 143) qui est réuni au précédent en formant une unité physique ou y est intégré et qui sert à analyser directement par voie photoélectrique les images des films développés et à produire des données d'image représentant les originaux contenus dans les films.

9. Système selon la revendication 8, caractérisé en ce que le dispositif d'entrée (100) comporte deux ou plusieurs modules d'entrée (130, 140) qui coopèrent avec le dispositif de commande (400), en particulier qui traitent différents types de films.

10. Système selon l'une des revendications 8 ou 9, caractérisé en ce que le dispositif d'entrée (130) comporte, pour des films photographiques déjà développés, au moins un module d'entrée qui coopère avec le dispositif de commande (400) et qui est muni d'un dispositif d'analyse pour analyser directement par voie photoélectrique les images des films développés et pour produire des données d'image représentant les originaux contenus dans les films.

11. Système selon une des revendications précédentes, caractérisé en ce que le dispositif de sortie (200) comporte au moins un module de sortie (230 ; 240) qui coopère avec le dispositif de commande (400) et qui comprend un dispositif de développement (232 ; 242) pour un support de tirage photographique ainsi qu'un dispositif numérique d'insolation (231 ; 241) qui est réuni au précédent en formant une unité physique ou y est intégré et qui sert à reporter directement sur le support de tirage photographique non encore développé les images des données d'image enregistrées en stockage intermédiaire dans la mémoire de données (300).

12. Système selon la revendication 11, caractérisé en ce que le dispositif de sortie (200) comporte deux ou plusieurs modules de sortie (230, 240) qui coopèrent avec le dispositif de commande (400), en particulier qui traitent différents supports de tirage, et en ce que le dispositif de commande (400) transmet sélectivement à ces modules de sortie (230, 240) les données d'image enregistrées en stockage intermédiaire dans la mémoire de données (300) en fonction de leur charge de travail et, respectivement, de leur disponibilité et en fonction des données d'accompagnement associées aux données d'image.

13. Système selon la revendication 12, caractérisé en ce que les modules de sortie (230, 240) comportent un dispositif de développement commun à plusieurs voies, à chaque voie du dispositif de développement étant associé un dispositif numérique d'insolation spécifique.

14. Système selon une des revendications précédentes, caractérisé par un dispositif de collecte (700) qui coopère avec le dispositif de commande (400) et est commandé par celui-ci et qui, en fonction des données d'accompagnement associées aux données d'image saisies, classe les moyens de sortie sur lesquels le dispositif de sortie (200) a reporté des données d'image.

15. Système selon la revendication 5, caractérisé par un dispositif de collecte (700) qui coopère avec le dispositif de commande (400) et est commandé par celui-ci et qui, en fonction des données d'accompagnement associées aux données d'image saisies, classe les moyens de sortie sur lesquels le dispositif de sortie (200) a reporté des données d'image et les associe aux supports numériques de données correspondants lus par le dispositif de lecture.

16. Système selon l'une des revendications 8 à 10, caractérisé par un dispositif de collecte (700) qui coopère avec le dispositif de commande (400) et est commandé par celui-ci et qui, en fonction des données d'accompagnement associées aux données d'image saisies, classe les moyens de sortie sur lesquels le dispositif de sortie (200) a reporté des données d'image et les associe aux films photographiques correspondants traités par le ou les modules d'entrée (130, 140).

17. Système selon l'une des revendications 8 à 10 et selon l'une des revendications 11 à 13, caractérisé par un dispositif de collecte (700) qui coopère avec le dispositif de commande (400) et est commandé par celui-ci et qui, en fonction des données d'accompagnement associées aux données d'image saisies, classe les tirages photographiques produits confectionnés par le ou les modules de sortie (230, 240) et les associe aux films photographiques correspondants traités par le ou les modules d'entrée (130, 140).

18. Système- selon la revendication 2 et selon l'une des revendications 8 à 10 et l'une des revendications 11 à 13, caractérisé en ce que le dispositif numérique de mise en forme (600) qui coopère avec le dispositif de commande (400) met en forme les données d'image saisies en vue de leur exploitation dans le ou les dispositifs numériques d'insolation (231, 241) ou dans le ou les imprimantes couleur.

19. Système selon une des revendications précédentes, caractérisé en ce qu'il est conçu en forme de mini-laboratoire (1000) et comprend, réunis sous la forme d'une unité physique, une station de chargement de films (1131), un dispositif de développement et de séchage de films (1132/1132a), un dispositif d'analyse photoélectrique (1133), un module numérique de sortie (1230) et un module de commande (1500) commandant ces composants, la station de chargement (1131), le dispositif de développement et de séchage (1132/1132a) et le dispositif d'analyse photoélectrique (1133) coopérant directement entre eux.

20. Système selon la revendication 19, caractérisé en ce que le dispositif d'analyse photoélectrique (1133) est conçu pour traiter des types de films de différents formats et est équipé en particulier d'une plate-forme mobile (1260) qui est conçue pour le guidage et le positionnement mécaniques de films d'au moins deux formats différents.
